# EUROPEAN PATENT APPLICATION

(11) **EP 4 271 081 A1**
(43) Date of publication of application: **01.11.2023**
(21) Application number: 21914920.0
(22) Date of filing: 24.03.2021
(51) Int. Cl.: H04W 72/04, H04W 28/04

(54) **TRANSMISSION STATION AND RECEPTION STATION**

(30) Priority: 28.12.2020 WO PCT/JP2020/049109
(71) Applicant: Nippon Telegraph And Telephone Corporation, Chiyoda-ku Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); INOUE, Yasuhiko, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Gramm, Lins & Partner Patent- und Rechtsanwälte PartGmbB
(86) International application number: PCT/JP2021/012398
(87) International publication number: WO 2022/145058

(57) **Abstract**

A transmitting station (TX) according to an embodiment includes first and second wireless signal processing units (STA1 and STA2) and a link management unit (LM). The first and second wireless signal processing units are configured to be able to transmit wireless signals using first and second channels, respectively. The link management unit establishes multi-link with a receiving station by using the first and second wireless signal processing units. The link management unit is configured to be able to manage communication in which the multi-link are used and store first information (TBM) indicating a sequence number of transmission target data. When second information (RBM) indicating the sequence number of the data received by the receiving station is received from the receiving station via the first or second wireless signal processing unit, the link management unit sets a bit corresponding to the sequence number indicated by the second information in the first information as a transmitted bit.

## Description

### Technical Field

Embodiments relate to a transmitting station and a receiving station.

### Background Art

A wireless local area network (LAN) is known as an information communication system that wirelessly connects a base station to a wireless terminal apparatus.

### Citation List

### Non Patent Literature

Non Patent Literature 1: IEEE Std 802.11-2016,"9.3.1.8 BlockAckReq frame format"and"9.3.1.9 BlockAck frame format", 7 December 2016

### Summary of Invention

### Technical Problem

A task is to improve efficiency of data communication while using multi-link.

### Means for Solution to Problem

A transmitting station according to an embodiment includes a first wireless signal processing unit, a second wireless signal processing unit, and a link management unit. The first wireless signal processing unit is configured to be able to transmit a wireless signal by using a first channel. The second wireless signal processing unit is configured to be able to transmit a wireless signal by using a second channel different from the first channel. The link management unit establishes multi-links with a receiving station by using the first wireless signal processing unit and the second wireless signal processing unit. The link management unit is configured to be able to manage communication in which the multi-links are used and store first information indicating a sequence number of transmission target data. When second information indicating a sequence number of data which has been received by the receiving station is received from the receiving station via the first wireless signal processing unit or the second wireless signal processing unit, the link management unit sets a bit corresponding to the sequence number indicated by the second information in the first information as a transmitted bit.

### Advantageous Effects of Invention

The transmitting station according to an embodiment can improve the efficiency of data communication while using of multi-link.

### Brief Description of Drawings

Fig. 1 is a conceptual diagram illustrating an example of an overall configuration of an information communication system according to a first embodiment.
Fig. 2 is a conceptual diagram illustrating an example of a frequency band used for wireless communication in the information communication system according to the first embodiment.
Fig. 3 is a table illustrating an example of a link state of a base station and a wireless terminal apparatus included in the information communication system according to the first embodiment.
Fig. 4 is a block diagram illustrating an example of a hardware configuration of the base station included in the information communication system according to the first embodiment.
Fig. 5 is a block diagram illustrating an example of a hardware configuration of the wireless terminal apparatus included in the information communication system according to the first embodiment.
Fig. 6 is a block diagram illustrating an example of a functional configuration of a base station included in the information communication system according to the first embodiment.
Fig. 7 is a block diagram illustrating an example of a functional configuration of the wireless terminal apparatus included in the information communication system according to the first embodiment.
Fig. 8 is a block diagram illustrating an example of a functional configuration of a transmitting station in the information communication system according to the first embodiment.
Fig. 9 is a block diagram illustrating an example of a functional configuration of a receiving station in the information communication system according to the first embodiment.
Fig. 10 is a flowchart illustrating an example of architecture of a MAC layer in the information communication system according to the first embodiment.
Fig. 11 is a sequence diagram illustrating an example of a method of transmitting and receiving traffic allocated to one link between the transmitting station and the receiving station in the information communication system according to the first embodiment.
Fig. 12 is a conceptual diagram illustrating an example of a format of an A-MPDU used for communication between the transmitting station and the receiving station in the information communication system according to the first embodiment.
Fig. 13 is a conceptual diagram illustrating an example of a format of a data frame used for communication between the transmitting station and the receiving station in the information communication system according to the first embodiment.
Fig. 14 is a conceptual diagram illustrating an example of a format of a BlockAck request frame used for communication between the transmitting station and the receiving station in the information communication system according to the first embodiment.
Fig. 15 is a conceptual diagram illustrating an example of a format of a BlockAck frame used for communication between the transmitting station and the receiving station in the information communication system according to the first embodiment.
Fig. 16 is a flowchart illustrating an example of a delivery confirmation process in the transmitting station of the information communication system according to the first embodiment.
Fig. 17 is a conceptual diagram illustrating a specific example of a method of updating a transmission bitmap in the transmitting station of the information communication system according to the first embodiment.
Fig. 18 is a sequence diagram illustrating an example of a method of transmitting and receiving traffic allocated to a plurality of links between the transmitting station and the receiving station in the information communication system according to the first embodiment.
Fig. 19 is a flowchart illustrating an example of a delivery confirmation process in a transmitting station of an information communication system according to a second embodiment.
Fig. 20 is a conceptual diagram illustrating a specific example of a method of updating a transmission bitmap in the transmitting station of the information communication system according to the second embodiment.
Fig. 21 is a sequence diagram illustrating an example of a method of transmitting and receiving traffic allocated to a plurality of links between the transmitting station and the receiving station in the information communication system according to a modification of the second embodiment.

### Description of Embodiments

Hereinafter, an information communication system according to embodiments will be described with reference to the drawings. Each embodiment exemplifies an apparatus and a method of embodying the technical idea of the invention. The drawings are schematic or conceptual. Hereinafter, constituents that have substantially the same functions and configurations are denoted by the same reference numerals. Numbers after the characters configuring the reference numerals are referred to by reference numerals including the same characters and are used to distinguish between elements that have similar configurations. Similarly, each letter after a number configuring a reference numeral and "hyphen + number" are referred to by reference numerals including the same number and are used to distinguish between elements that have similar configurations. If it is not necessary to distinguish elements denoted by reference numerals containing the same letters or numbers from one another, these elements are referred to by reference numerals containing only letters or numbers.

### <1> First Embodiment

Hereinafter, an information communication system 1 according to the first embodiment will be described.

### <1-1> Configuration

### <1-1-1> Overall configuration

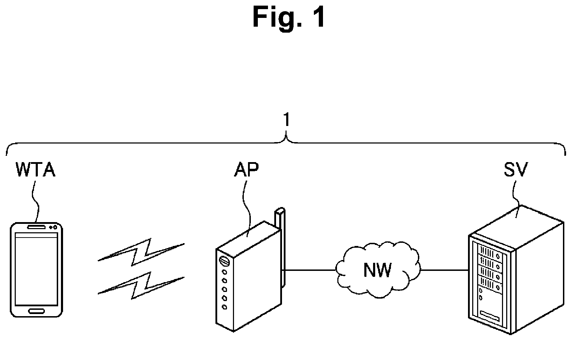

Fig. 1 is a conceptual diagram illustrating an example of an overall configuration of an information communication system 1 according to the first embodiment. As illustrated in Fig. 1, the information communication system 1 includes, for example, a base station (access point) AP, a wireless terminal apparatus (wireless terminal apparatus) WTA, and a server SV.

The base station AP is a wireless LAN access point or a wireless LAN router, and is configured to be connectable to a network NW. The base station AP is configured to be wirelessly connectable to one or more wireless terminal apparatuses WTA by using one type of band or a plurality of types of bands. The base station AP may be wirelessly connected to a wireless repeater (in other words, a wireless range extender, a relay station, or a repeater) or may be wirelessly connected to both the wireless terminal apparatus WTA and the wireless repeater.

The wireless terminal apparatus WTA is a wireless terminal such as a smartphone or a tablet computer. The wireless terminal apparatus WTA is configured to be wirelessly connectable to the base station AP. The wireless terminal apparatus WTA may be another electronic apparatus such as a desktop computer or a laptop computer. The wireless terminal apparatus WTA may be used as a wireless repeater. In the first embodiment, a case where one wireless terminal apparatus WTA is wirelessly connected to the base station AP will be described as an example.

The server SV is a computer configured to be connectable to the network NW and is configured to be able to communicate with the base station AP via the network NW. The server SV stores, for example, data of content for which the wireless terminal apparatus WTA is a target. The server SV can transmit and receive data to and from the wireless terminal apparatus WTA via the base station AP. Communication between the base station AP and the server SV may be wireless communication or may be a combination of wireless communication and wired communication.

The wireless communication between the base station AP and the wireless terminal apparatus WTA conforms to the IEEE 802.11 standard. In the IEEE 802.11 standard, first layer and the MAC sublayer of the second layer of the Open Systems Interconnection (OSI) reference model are defined. In the OSI reference model, a communication function is divided into seven layers (the first layer: the physical layer, the second layer: the data link layer, the third layer: the network layer, the fourth layer: the transport layer, the fifth layer: the session layer, the sixth layer: the presentation layer, and the seventh layer: the application layer). The data link layer includes the logical link control (LLC) layer and the media access control (MAC) layer. In the LLC layer, a destination service access point (DSAP) header, a source service access point (SSAP) header, or the like is added to data input from an upper application to form an LLC packet. In the MAC layer, a MAC header is added to the LLC packet to form a MAC frame.

Multi-links can be used for wireless connection between the base station AP and the wireless terminal apparatus WTA. The multi-links are wireless connection in which data can be transmitted and received using a plurality of links. In a set of the wirelessly connected base station AP and wireless terminal apparatus WTA, one thereof operates as a transmitting station and the other operates as a receiving station. The transmitting station can transmit a wireless signal including data input from an upper application by using at least one link included in the multi-links. The receiving station can receive a wireless signal transmitted by the transmitting station to restore data included in the wireless signal by using at least one link included in the multi-links. In the following description, a reference sign "TX" is added to the transmitting station, and a reference sign "RX" is added to the receiving station.

### (Frequency band used by base station AP and wireless terminal apparatus WTA)

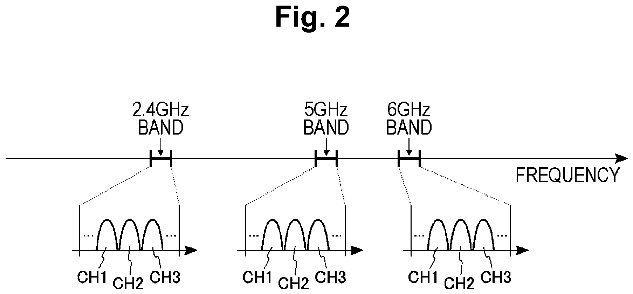

Fig. 2 is a conceptual diagram illustrating an example of a frequency band used for wireless communication in the information communication system 1 according to the first embodiment. As illustrated in Fig. 2, in the wireless communication between the base station AP and the wireless terminal apparatus WTA, for example, a 2.4 GHz band, a 5 GHz band, or a 6 GHz band is used. Each frequency band includes a plurality of channels. Specifically, it is assumed that each of the 2.4 GHz band, the 5 GHz band, and the 6 GHz band includes three channels CH1, CH2, and CH3. For the wireless communication, a frequency band other than the 2.4 GHz band, the 5 GHz band, and the 6 GHz band may be used, and at least one channel CH may be allocated to each frequency band. In the multi-links, two or more channels CH are used. The plurality of channels CH used for the multi-links may be the same frequency band or different frequency bands.

### (Example of link state)

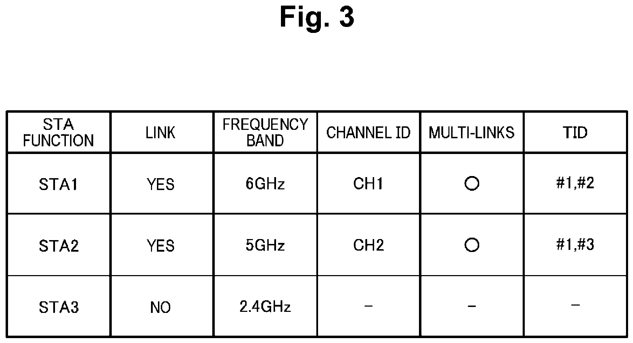

Fig. 3 is a table illustrating an example of a link state of the base station AP and the wireless terminal apparatus WTA included in the information communication system 1 according to the first embodiment. The table is provided in, for example, a link management unit of the base station AP. The base station AP and the wireless terminal apparatus WTA manage a link state using, for example, the table illustrated in Fig. 3. Hereinafter, a table for managing a multi-link state is referred to as "link management information." In the embodiment, a case where the multi-links in states illustrated in Fig. 3 are established will be described as an example. As illustrated in Fig. 3, the link management information includes, for example, information regarding each of an STA function, a link, a frequency band, a channel ID, a link destination ID, multi-links, and a traffic identifier (TID) .

The STA function is a wireless signal processing unit included in each of the base station AP and the wireless terminal apparatus WTA. Each of the base station AP and the wireless terminal apparatus WTA can have a plurality of STA functions. One STA function is associated with one link (that is, channel CH). In the first embodiment, each of the base station AP and the wireless terminal apparatus WTA has three STA functions (STA1, STA2, and STA3). STA1, STA2, and STA3 of the base station AP are associated with STA1, STA2, and STA3 of the wireless terminal apparatus WTA, respectively.

In the first embodiment, STA1 of each of the base station AP and the wireless terminal apparatus WTA is associated with the channel CH1 of the 6 GHz band. STA2 of each of the base station AP and the wireless terminal apparatus WTA is associated with the channel CH2 of the 5 GHz band. STA1 and STA2 of each of the base station AP and the wireless terminal apparatus WTA are in a linked state and establish multi-links. On the other hand, STA3 of each of the base station AP and the wireless terminal apparatus WTA is associated with the 2.4 GHz band and is in a no-link state.

The TID is an identifier indicating a type of traffic (data). Each of the STA functions transmits and receives traffic of the TID assigned to oneself. Examples of the type of traffic include "voice (VO)," "video (VI)," "best effort (BE)," and "background (BK)." In the multi-links, one STA function may be allocated to one TID or a plurality of STA functions may be allocated to one TID. In this example, TID#1 is allocated to STA1 and STA2 of each of the base station AP and the wireless terminal apparatus WTA. TID#2 is allocated to STA 2 of each of the base station AP and the wireless terminal apparatus WTA. TID#3 is allocated to STA 3 of each of the base station AP and the wireless terminal apparatus WTA. Each of TID#1 to TID#3 corresponds to any of VO, VI, BE, and BK.

Traffic and an STA function are associated with each other when multi-links are established between the base station AP and the wireless terminal apparatus WTA. For example, the association between the traffic and the STA function is set such that a traffic amount (an amount of data) is equal among a plurality of links included in the multi-links. The present invention is not limited thereto, and traffic of similar types (priority/non-priority and the like) may be collected in a specific link included in the multi-links. A frequency band allocated to transmit and receive traffic is preferably selected in accordance with a type of traffic and an amount of data. For example, it is conceivable that voice (VO) of which an amount of data is small is associated with a frequency band of 2.4 GHz and video (VI) of which an amount of data is large is associated with a frequency band of 5 GHz.

### <1-1-2> Hardware configuration

Hereinafter, an example of a hardware configuration of each of the base station AP and the wireless terminal apparatus WTA will be described.

### (Hardware configuration of base station AP)

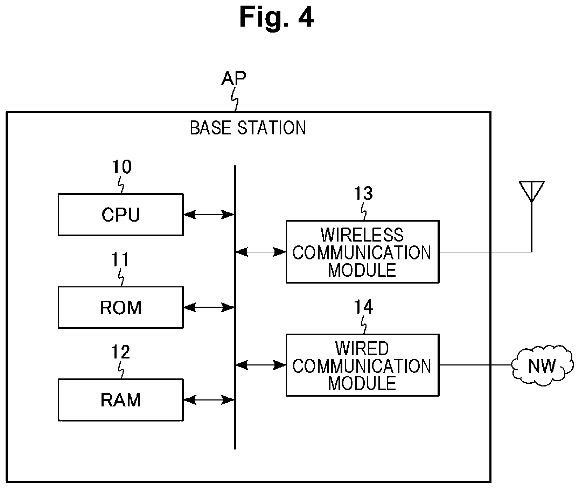

Fig. 4 is a block diagram illustrating an example of a hardware configuration of the base station AP included in the information communication system 1 according to the first embodiment. As illustrated in Fig. 4, the base station AP includes, for example, a central processing unit (CPU) 10, a read only memory (ROM) 11, a random access memory (RAM) 12, a wireless communication module 13, and a wired communication module 14.

The CPU 10 is an integrated circuit capable of executing various programs and controls an operation of the entire base station AP. The ROM 11 is a nonvolatile semiconductor memory and stores a program for controlling the base station AP, control data, and the like. The RAM 12 is, for example, a volatile semiconductor memory and is used as a working area of the CPU 10. The wireless communication module 13 is a circuit used to transmit and receive data with a wireless signal and is configured to be connectable to an antenna. The wireless communication module 13 may include a plurality of communication modules respectively corresponding to a plurality of frequency bands. The wired communication module 14 is a circuit used to transmit and receive data with a wired signal and is configured to be connectable to the network NW. The base station AP may have another hardware configuration. For example, when the base station AP is wirelessly connected to the network NW, the wired communication module 14 may be omitted from the base station AP.

### (Hardware configuration of wireless terminal apparatus WTA)

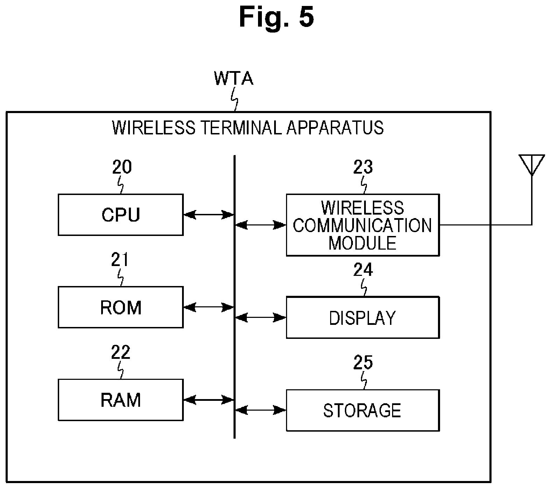

Fig. 5 is a block diagram illustrating an example of a hardware configuration of the wireless terminal apparatus WTA included in the information communication system 1 according to the first embodiment. As illustrated in Fig. 5, the wireless terminal apparatus WTA includes, for example, a CPU 20, a ROM 21, a RAM 22, a wireless communication module 23, a display 24, and a storage 25.

The CPU 20 is an integrated circuit capable of executing various programs and controls an operation of the entire wireless terminal apparatus WTA. The ROM 21 is a nonvolatile semiconductor memory and stores a program for controlling the wireless terminal apparatus WTA, control data, and the like. The RAM 22 is, for example, a volatile semiconductor memory and is used as a working area of the CPU 20. The wireless communication module 23 is a circuit used to transmit and receive data by a wireless signal and is configured to be connectable to an antenna. The wireless communication module 23 can include, for example, a plurality of communication modules corresponding to a plurality of frequency bands. The display 24 displays, for example, a graphical user interface (GUI) corresponding to application software. The display 24 may have a function as an input interface of the wireless terminal apparatus WTA. The storage 25 is a nonvolatile storage apparatus and stores, for example, system software or the like of the wireless terminal apparatus WTA. The wireless terminal apparatus WTA may have another hardware configuration. For example, when the wireless terminal apparatus WTA is an Internet of Things (IoT) terminal or the like, the display 24 may be omitted from the wireless terminal apparatus WTA.

### <1-1-3> Functional configuration

Hereinafter, an example of a functional configuration of the base station AP and an example of a functional configuration of the wireless terminal apparatus WTA will be described. Next, an example of a functional configuration when the base station AP or the wireless terminal apparatus WTA operates as a transmitting station TX and an example of a functional configuration when the base station AP or the wireless terminal apparatus WTA operates as a receiving station RX will be described.

### (Functional configuration of base station AP)

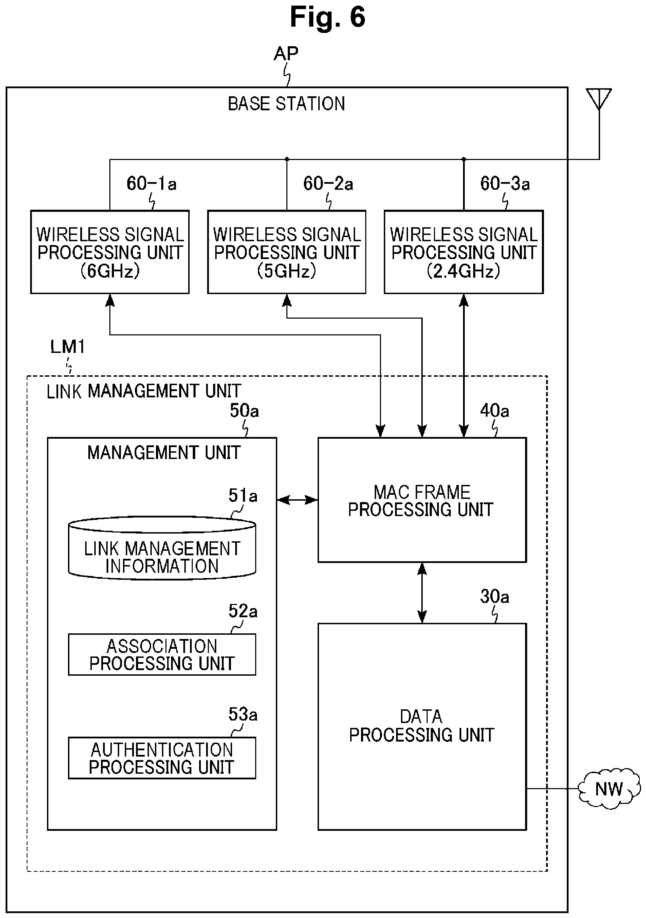

Fig. 6 is a block diagram illustrating an example of a functional configuration of the base station AP included in the information communication system 1 according to the first embodiment. As illustrated in Fig. 6, the base station AP includes, for example, a data processing unit 30a, a MAC frame processing unit 40a, a management unit 50a, and wireless signal processing units 60-1a, 60-2a, and 60-3a. Processes of the data processing unit 30a, the MAC frame processing unit 40a, the management unit 50a, and the wireless signal processing units 60-1a, 60-2a, and 60-3a are implemented by, for example, the CPU 10 and the wireless communication module 13.

The data processing unit 30a can execute processes of the LLC layer and the upper layer on input data. When the base station AP is the transmitting station TX, the data processing unit 30a inputs data input from the server SV via the network NW to the MAC frame processing unit 40a. When the base station AP is the receiving station RX, the data processing unit 30a transmits the data input from the MAC frame processing unit 40a to the server SV via the network NW.

The MAC frame processing unit 40a executes some of the processes of the MAC layer on the input data. When the base station AP is the transmitting station TX, the MAC frame processing unit 40a generates a MAC frame from the data input from the data processing unit 30a. When the base station AP is the receiving station RX, the MAC frame processing unit 40a restores data from the MAC frame input from each of the wireless signal processing units 60-1a, 60-2a, and 60-3a. The MAC frame processing unit 40a can also execute a process based on an instruction from the management unit 50a and exchange information with the management unit 50a.

The management unit 50a manages a link state with the wireless terminal apparatus WTA based on notifications received from the wireless signal processing units 60-1a, 60-2a, and 60-3a via the MAC frame processing unit 40a. The management unit 50a includes link management information 51a, an association processing unit 52a, and an authentication processing unit 53a. The link management information 51a is stored in, for example, the RAM 12 and includes information regarding the wireless terminal apparatus WTA to which the base station AP is wirelessly connected. The association processing unit 52a executes a protocol related to association when a connection request of the wireless terminal apparatus WTA is received via any one of the wireless signal processing units 60-1a, 60-2a, and 60-3a. The authentication processing unit 53a executes a protocol related to authentication subsequently to the connection request.

Each of the wireless signal processing units 60-1a, 60-2a, and 60-3a transmits and receives data between the base station AP and the wireless terminal apparatus WTA by wireless communication. Specifically, each of the wireless signal processing units 60-1a, 60-2a, and 60-3a can execute some of the processes of the MAC layer and a process of the first layer on input data or a wireless signal. When the base station AP is the transmitting station TX, each of the wireless signal processing units 60-1a, 60-2a, and 60-3a adds a preamble, a physical layer (PHY) header, and the like to the data input from the MAC frame processing unit 40a to generate a wireless frame. Then, each of the wireless signal processing units 60-1a, 60-2a, and 60-3a converts the wireless frame into a wireless signal and delivers the converted wireless signal via the antenna of the base station AP. When the base station AP is the receiving station RX, each of the wireless signal processing units 60-1a, 60-2a, and 60-3a converts a wireless signal received via an antenna of the base station AP into a wireless frame. Then, each of the wireless signal processing units 60-1a, 60-2a, and 60-3a inputs the data included in the wireless frame to the MAC frame processing unit 40a. The wireless signal processing units 60-1a, 60-2a, and 60-3a may or may not share the antenna of the base station AP. In this example, the wireless signal processing units 60-1a, 60-2a, and 60-3a handle wireless signals of the 6 GHz band, the 5 GHz band, and the 2.4 GHz band, respectively. That is, the wireless signal processing units 60-1a, 60-2b, and 60-3b correspond to STA1, STA2, and STA3 of the base station AP, respectively.

Hereinafter, a set of the data processing unit 30a, the MAC frame processing unit 40a, and the management unit 50a included in the base station AP is referred to as a "link management unit LM1." The link management unit LM1 can determine association between traffic and the STA function when the multi-links are established between the base station AP and the wireless terminal apparatus WTA.

### (Functional Configuration of Wireless Terminal Apparatus WTA)

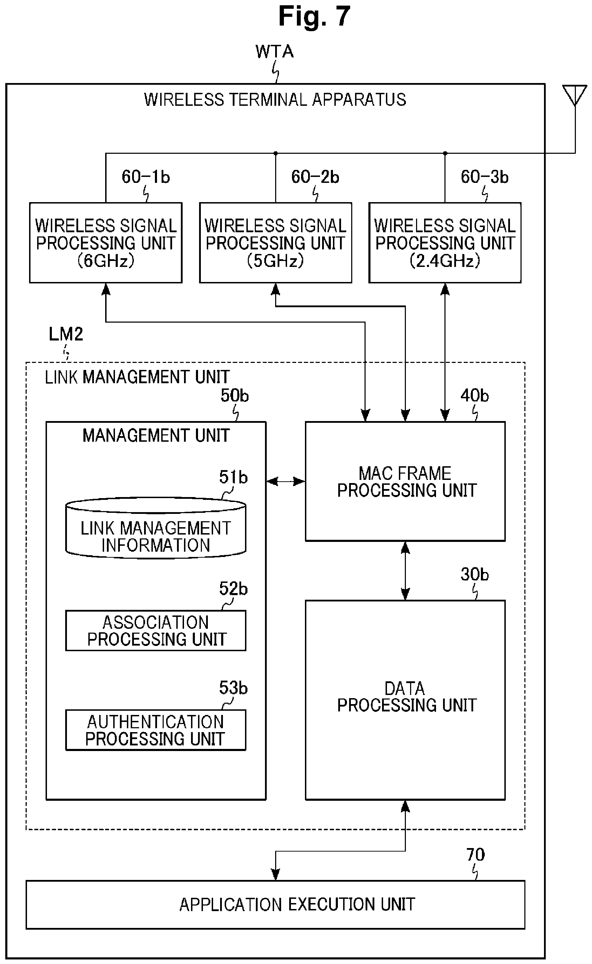

Fig. 7 is a block diagram illustrating an example of a functional configuration of the wireless terminal apparatus WTA included in the information communication system 1 according to the first embodiment. As illustrated in Fig. 7, the wireless terminal apparatus WTA includes, for example, a data processing unit 30b, a MAC frame processing unit 40b, a management unit 50b, wireless signal processing units 60-1b, 60-2b, and 60-3b, and an application executer 70. Processes of the data processing unit 30b, the MAC frame processing unit 40b, the management unit 50b, and the wireless signal processing units 60-1b, 60-2b, and 60-3b are implemented by, for example, the CPU 20 and the wireless communication module 23. A process of the application executer 70 is implemented by, for example, the CPU 20.

The data processing unit 30b can execute processes of the LLC layer and the upper layer on the input data. When the wireless terminal apparatus WTA is the transmitting station TX, the data processing unit 30b inputs the data input from the application executer 70 to the MAC frame processing unit 40b. When the wireless terminal apparatus WTA is the receiving station RX, the data processing unit 30b inputs the data input from the MAC frame processing unit 40b to the application executer 70.

The MAC frame processing unit 40b executes some of the processes of the MAC layer on the input data. When the wireless terminal apparatus WTA is the transmitting station TX, the MAC frame processing unit 40b generates a MAC frame from the data input from the data processing unit 30b. When the wireless terminal apparatus WTA is the receiving station RX, the MAC frame processing unit 40b restores data from the MAC frame input from each of the wireless signal processing units 60-1b, 60-2b, and 60-3b. The MAC frame processing unit 40b can execute a process based on an instruction of the management unit 50b and exchange information with the management unit 50b.

The management unit 50b manages a link state with the base station AP based on notifications received from the wireless signal processing units 60-1b, 60-2b, and 60-3b via the MAC frame processing unit 40b. The management unit 50b includes link management information 51b, an association processing unit 52b, and an authentication processing unit 53b. The link management information 51b is stored in, for example, the RAM 22 and includes information regarding the base station AP to which the wireless terminal apparatus WTA is wirelessly connected. When a connection request of the wireless terminal apparatus WTA is received via any one of the wireless signal processing units 60-1b, 60-2b, and 60-3b, the association processing unit 52b executes a protocol related to association. The authentication processing unit 53b executes a protocol related to authentication subsequently to the connection request.

Each of the wireless signal processing units 60-1b, 60-2b, and 60-3b transmits and receives data between the base station AP and the wireless terminal apparatus WTA by wireless communication. Specifically, each of the wireless signal processing units 60-1b, 60-2b, and 60-3b can execute some of the processes of the MAC layer and the process of the first layer on the input data or the wireless signal. More specifically, when the wireless terminal apparatus WTA is the transmitting station TX, each of the wireless signal processing units 60-1b, 60-2b, and 60-3b adds a preamble, a PHY header, and the like to the data input from the MAC frame processing unit 40b to generate a wireless frame. Then, each of the wireless signal processing units 60-1b, 60-2b, and 60-3b converts the wireless frame into a wireless signal, and delivers the converted wireless signal via the antenna of the wireless terminal apparatus WTA. When the wireless terminal apparatus WTA is the receiving station RX, each of the wireless signal processing units 60-1b, 60-2b, and 60-3b converts a wireless signal received via an antenna of the wireless terminal apparatus WTA into a wireless frame. Then, each of the wireless signal processing units 60-1b, 60-2b, and 60-3b inputs the data included in the wireless frame to the MAC frame processing unit 40b. The wireless signal processing units 60-1b, 60-2b, and 60-3b may or may not share the antenna of the wireless terminal apparatus WTA. In this example, the wireless signal processing units 60-1b, 60-2b, and 60-3b handle wireless signals of 6 GHz band, 5 GHz band, and 2.4 GHz band, respectively. That is, the wireless signal processing units 60-1b, 60-2b, and 60-3b correspond to STA1, STA2, and STA3 of the wireless terminal apparatus WTA, respectively.

The application executer 70 executes an application capable of using the data input from the data processing unit 30b. Then, the application executer 70 inputs data to the data processing unit 30b in response to an operation of the application and acquires data from the data processing unit 30b. The application executer 70 can display application information on the display 24. The application executer 70 can execute a process in response to an operation by the input interface.

Hereinafter, a set of the data processing unit 30b, the MAC frame processing unit 40b, and the management unit 50b included in the wireless terminal apparatus WTA is referred to as a "link management unit LM2." The link management unit LM2 can determine the association between the traffic and the STA function when the multi-link is established between the base station AP and the wireless terminal apparatus WTA. For example, in multi-link setup, the link management unit LM2 determines association between traffic and STA functions and requests the link management unit LM1 of the base station AP to apply the association. Then, when the wireless terminal apparatus WTA receives a positive response to the request from the base station AP, the association between the traffic and the STA function is determined.

### (Functional configuration of transmitting station TX)

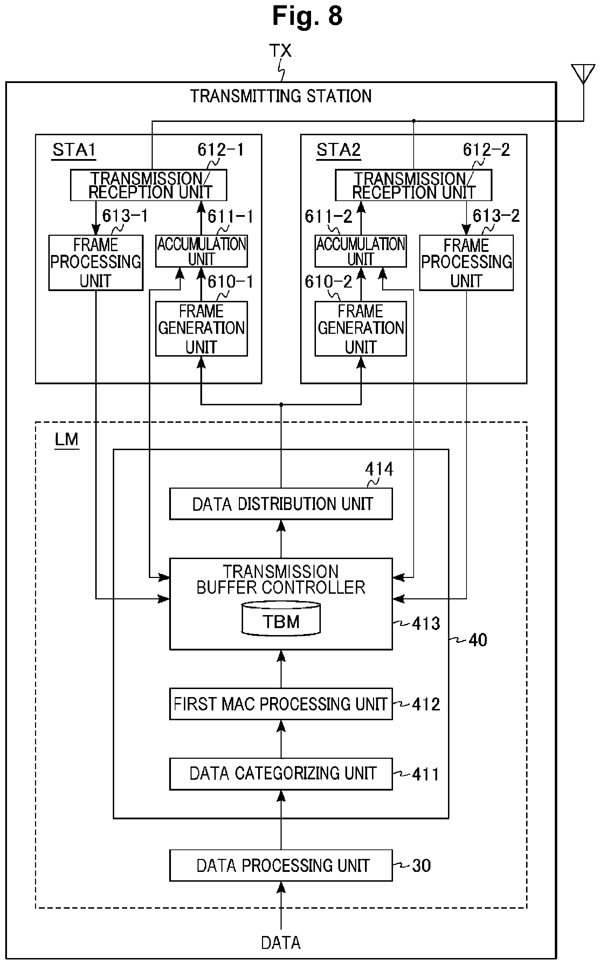

Fig. 8 is a block diagram illustrating an example of a functional configuration of the transmitting station TX in the information communication system 1 according to the first embodiment. The transmitting station TX is either the base station AP or the wireless terminal apparatus WTA. Fig. 8 illustrates a more detailed functional configuration of the base station AP or the wireless terminal apparatus WTA operating as the transmitting station TX. In Fig. 8, functional configurations other than the data processing unit 30, the MAC frame processing unit 40, and the two STA functions (STA1 and STA2) are omitted.

As illustrated in Fig. 8, the MAC frame processing unit 40 of the transmitting station TX includes a data categorizing unit 411, a first MAC processing unit 412, a transmitting buffer controller 413, and a data distribution unit 414. The STA function of the transmitting station TX includes a frame generation unit 610, an accumulation unit 611, a transmission/reception unit 612, and a frame processing unit 613. Specifically, STA1 of the transmitting station TX includes a frame generation unit 610-1, an accumulation unit 611-1, a transmission/reception unit 612-1, and a frame processing unit 613-1, and STA2 of the transmitting station TX includes a frame generation unit 610-2, an accumulation unit 611-2, a transmission/reception unit 612-2, and a frame processing unit 613-2.

The data categorizing unit 411 classifies the data input from the data processing unit 30 in accordance with the type of traffic. Specifically, the data categorizing unit 411 associates each input data with a TID. Then, the data categorizing unit 411 inputs the classified data to the first MAC processing unit 412.

The first MAC processing unit 412 executes some of the processes of the MAC layer on the data input from the data categorizing unit 411. Specifically, the first MAC processing unit 412 executes aggregate-MAC service data unit (A-MSDU) aggregation, allocation of sequence numbers SN, a fragment, aggregate-MAC protocol data unit (A-MPDU) encryption, and the like to be described below. Then, the first MAC processing unit 412 inputs the data on which some of the processes of the MAC layer has been executed (for example, an encrypted MPDU) to the transmitting buffer controller 413. The MPDU corresponds to a unit of data in the MAC layer.

The transmission buffer controller 413 stores the data input from the first MAC processing unit 412. The transmission buffer controller 413 stores a transmission bitmap TBM. The transmission bitmap TBM indicates a transmission status of data stored in the transmission buffer controller 413. The transmission bitmap TBM includes a start sequence number SSN and bitmap information BMI to be described below. The transmission bitmap TBM may be stored for each TID. Then, the transmission buffer controller 413 inputs the stored data to the data distribution unit 414.

The data distribution unit 414 distributes the data input from the transmission buffer controller 413 to the frame generation unit 610 of the STA function associated with the TID of the data. Specifically, in the embodiment, the data of TID#1 allocated to STA1 and STA2 is input to one of the frame generation unit 610-1 of STA1 and the frame generation unit 610-2 of STA2. The data of TID#2 allocated to STA1 is input to the frame generation unit 610-1 of STA1. The data of TID#3 allocated to STA2 is input to the frame generation unit 610-2 of STA2.

A plurality of functional configurations included in each of the STA functions operate in a similar manner. Therefore, a plurality of functional configurations included in each STA function will be described below focusing on one STA function (STA1 of the transmitting station TX).

The frame generation unit 610-1 executes some of the processes of the MAC layer on the data input from the data distribution unit 414. Specifically, the frame generation unit 610-1 generates a wireless frame by executing addition of a MAC header and an error detection code to be described below, aggregate-MAC protocol data unit (A-MPDU) aggregation, and the like. Then, the frame generation unit 610-1 inputs the generated wireless frame (for example, A-MPDU) to the accumulation unit 611-1. The frame generation unit 610-1 can generate a wireless frame (block acknowledgment (BlockAck) request frame) including a BlockAck request input from the link management unit LM and input the wireless frame to the accumulation unit 611-1. The BlockAck request is generated, for example, by the transmission buffer controller 413 of the link management unit LM.

The accumulation unit 611-1 temporarily stores the wireless frame input from the frame generation unit 610-1. The wireless frame stored in the accumulation unit 611-1 is input to the transmission/reception unit 612-1. In other words, the accumulation unit 611-1 stores data (wireless frame) waiting to be transmitted by the STA function. Then, the accumulation unit 611-1 discards the data transmitted by the transmission/reception unit 612-1 from the accumulation unit 611-1. Note that the accumulation unit 611-1 may notify the transmission buffer controller 413 of information regarding data waiting to be transmitted and stored in the accumulation unit 611-1 in response to an inquiry from the transmission buffer controller 413. As the information of the stored data, for example, TID information and a sequence number SN can be used.

The transmission/reception unit 612-1 executes physical layer processing on the data (wireless frame) input from the accumulation unit 611-1. The transmission/reception unit 612-1 includes, for example, a transmission queue in which data is temporarily stored for each TID and has a channel access function capable of executing carrier sense multiple access/collision avoidance (CSMA/CA) or the like. Then, the transmission/reception unit 612-1 transmits a wireless signal including the data input from the accumulation unit 611-1 via the antenna. When the wireless signal including BlockAck transmitted by the receiving station RX is received via the antenna after wireless transmission of the data stored in the transmission buffer controller 413, the transmission/reception unit 612-1 inputs the BlockAck included in the wireless signal to the frame processing unit 613-1.

The frame processing unit 613-1 executes some of the processes of the MAC layer on the BlockAck frame input from the transmission/reception unit 612-1. Then, the frame processing unit 613-1 inputs the BlockAck to the transmission buffer controller 413 in the link management unit LM. The link management unit LM confirms whether data is received by the receiving station RX based on the start sequence number SSN indicated by the BlockAck input to the transmission buffer controller 413 and the bitmap information BMI and updates content of the transmission bitmap TBM. Then, the link management unit LM of the transmitting station TX erases the data confirmed to be received by the receiving station RX from the transmission buffer controller 413. Conversely, when there is data confirmed not to be received by the receiving station RX, the link management unit LM executes a process of retransmitting the data confirmed not to be received by the receiving station RX.

An access parameter in CSMA/CA is allocated such that transmission of a wireless signal is prioritized in, for example, an order of VO, VI, BE, and BK. The access parameter includes, for example, CWmin, CWmax, AIFS, and TXOPLimit. CWmin and CWmax respectively indicate minimum and maximum values of a contention window which is a transmission waiting time for collision avoidance. An arbitration inter frame space (AIFS) indicates a fixed transmission waiting time set for each access category for collision avoidance control that has a priority control function. TXOPLimit indicates an upper limit value of a transmission opportunity (TXOP) corresponding to a channel occupancy time. For example, the shorter the CWmin and CWmax are, the easier a transmission right of the transmission queue is. The smaller the AIFS is, the hither the priority of the transmission queue is. The higher the value of TXOPlimit is, the larger an amount of data transmitted with one transmission right is.

### (Functional configuration of receiving station RX)

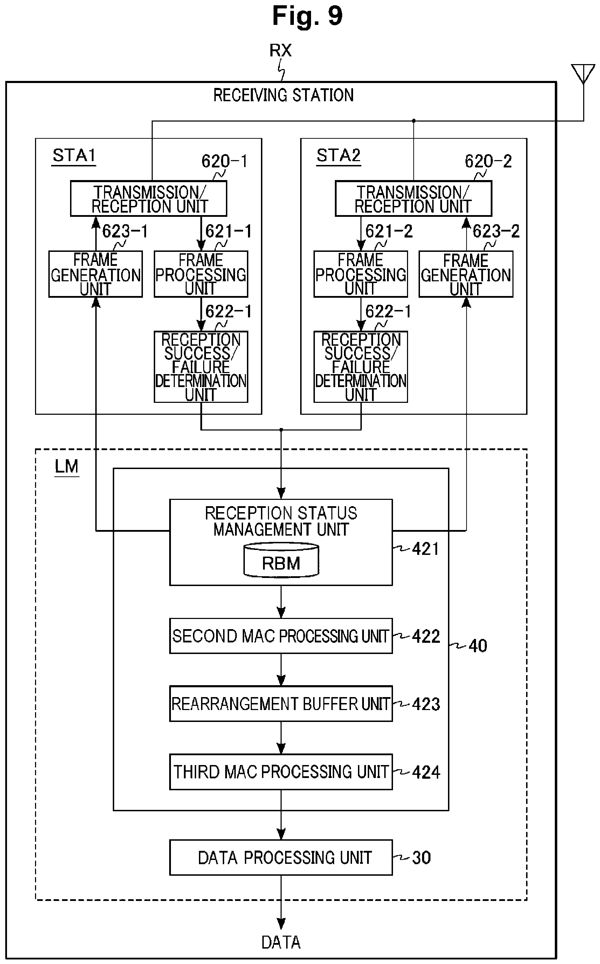

Fig. 9 is a block diagram illustrating an example of a functional configuration of the receiving station RX in the information communication system 1 according to the first embodiment. The receiving station RX is either the base station AP or the wireless terminal apparatus WTA. Fig. 9 illustrates a more detailed functional configuration of the base station AP or the wireless terminal apparatus WTA operating as the receiving station RX. In Fig. 9, functional configurations other than the data processing unit 30, the MAC frame processing unit 40, and the two STA functions (STA1 and STA2) are omitted.

As illustrated in Fig. 9, each STA function of the receiving station RX includes a transmission/reception unit 620, a frame processing unit 621, a reception success/failure determination unit 622, and a frame generation unit 623. Specifically, STA1 of the receiving station RX includes a transmission/reception unit 620-1, a frame processing unit 621-1, a reception success/failure determination unit 622-1, and a frame generation unit 623-1. STA2 of the receiving station RX includes a transmission/reception unit 620-2, a frame processing unit 621-2, a reception success/failure determination unit 622-2, and a frame generation unit 623-2. The MAC frame processing unit 40 of the receiving station RX includes a reception status management unit 421, a second MAC processing unit 422, a rearrangement buffer unit 423, and a third MAC processing unit 424. A plurality of functional configurations included in each STA function can operate in a similar manner. Therefore, a plurality of functional configurations included in each STA function will be described below focusing on one STA function (STA1 of the receiving station RX).

The transmission/reception unit 620-1 executes physical layer processing on the wireless signal received via the antenna. When a wireless signal including data transmitted by the transmitting station TX is received via the antenna, the transmission/reception unit 620-1 inputs the data included in the wireless signal to the frame processing unit 621-1.

The frame processing unit 621-1 executes some of the processes of the MAC layer on the data input from the transmission/reception unit 620-1. Specifically, the frame processing unit 621-1 executes A-MPDU deaggregation and the like to be described below. Then, the frame processing unit 621-1 inputs the data on which some of the processes of the MAC layer has been executed to the reception success/failure determination unit 622-1.

The reception success/failure determination unit 622-1 executes some of the processes of the MAC layer on the data input from the frame processing unit 621-1. Specifically, the reception success/failure determination unit 622-1 executes error detection and the like. Then, the reception success/failure determination unit 622-1 inputs data indicating whether there is an error to the reception status management unit 421. The reception success/failure determination unit 622-1 may discard the data in which the error has been detected.

The reception status management unit 421 inputs data corresponding to traffic among the data input from the reception success/failure determination unit 622-1 to the second MAC processing unit 422. The reception status management unit 421 stores a reception bitmap RBM indicating a reception status of data and updates the reception bitmap RBM based on the data input from the reception success/failure determination unit 622-1. Specifically, the reception status management unit 421 manages the reception status of data corresponding to each sequence number SN with bits of "0" and "1." For example, when the data is input, the reception status management unit 421 updates a corresponding bit in the reception bitmap RBM from "0" to "1." When the BlockAck request is included in the data input from the reception success/failure determination unit 622-1, the reception status management unit 421 generates a BlockAck including at least a part of the reception bitmap RBM and inputs the generated BlockAck to the frame generation unit 623-1.

The frame generation unit 623-1 generates a wireless frame (BlockAck frame) including the BlockAck input from the reception status management unit 421. Then, the frame generation unit 623-1 inputs the generated wireless frame to the transmission/reception unit 620-1. When the wireless frame is input, the transmission/reception unit 620-1 transmits a wireless signal including the input wireless frame via the antenna.

The second MAC processing unit 422 executes some of the processes of the MAC layer on the data input from the reception status management unit 421. Specifically, the second MAC processing unit 422 executes MPDU decryption and the like to be described below. Then, the second MAC processing unit 422 inputs the generated data to the rearrangement buffer unit 423.

The rearrangement buffer unit 423 stores the data (MPDU) input from the second MAC processing unit 422 and rearranges the stored data. The data is rearranged based on the sequence numbers SN included in the stored data (MPDU). Then, the rearrangement buffer unit 423 inputs the ordered data to the third MAC processing unit 424.

The third MAC processing unit 424 executes some of the processes of the MAC layer on the data input from the rearrangement buffer unit 423. Specifically, the third MAC processing unit 424 executes defragmentation, A-MSDU deaggregation, and the like to be described below. Then, the third MAC processing unit 424 inputs the generated data (MSDU) to the data processing unit 30. As a result, the data included in the wireless signal received by the receiving station RX is input to the upper layer.

### <1-2> Operation

Hereinafter, operations of the transmitting station TX and the receiving station RX in the information communication system 1 according to the first embodiment will be described. First, an overview of an architecture of the MAC layer will be described. Next, an example of a method of transmitting and receiving traffic allocated to one link and an example of a method of transmitting and receiving traffic allocated to a plurality of links while using multi-link will be described.

### <1-2-1> Architecture of MAC layer

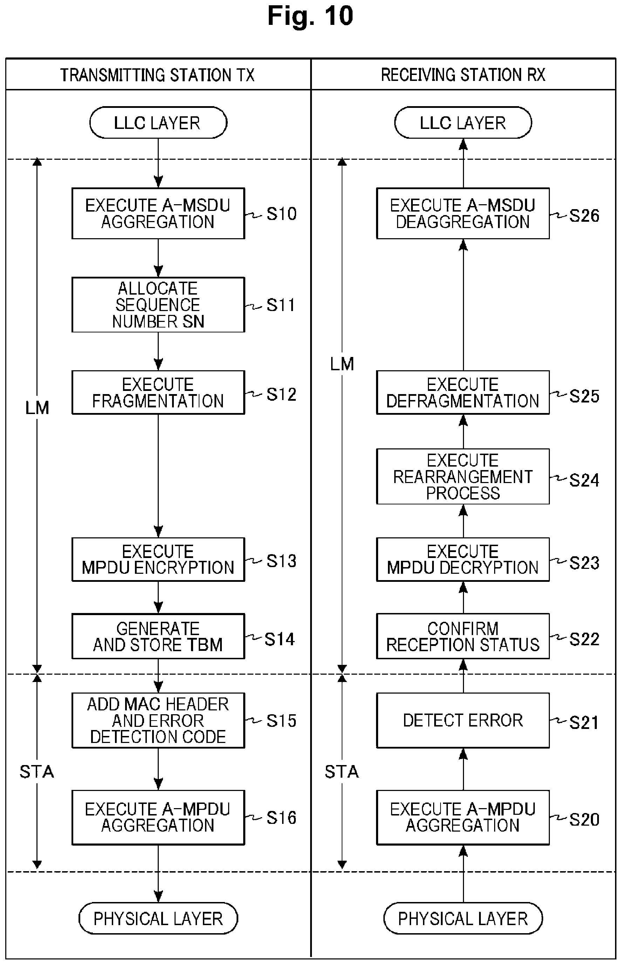

Fig. 10 is a flowchart illustrating an example of architecture of the MAC layer in the information communication system 1 according to the first embodiment. The left side of Fig. 10 illustrates an example of an architecture of the MAC layer in the transmitting station TX. The right side of Fig. 10 illustrates an example of the architecture of the MAC layer in the receiving station RX.

### (Process of transmitting station TX)

As illustrated on the left side of Fig. 10, when the process of the LLC layer on data to be transmitted is completed, the transmitting station TX sequentially executes processes of steps S10 to S16 in the MAC layer.

In the process of step S10, the first MAC processing unit 412 of the transmitting station TX executes A-MSDU aggregation. The A-MSDU aggregation is a process of combining a plurality of MAC service data units (MSDUs) input from the LLC layer to generate one A-MSDU. The MSDU is a unit of data handled in the LLC layer. When the plurality of MSDUs have the same receiving station address and the same TID, the first MAC processing unit 412 can generate an A-MSDU using the plurality of MSDUs.

In the process of step S11, the first MAC processing unit 412 of the transmitting station TX allocates one sequence number SN to one A-MSDU. The first MAC processing unit 412 may manage the sequence number SN for each TID or may collectively manage the sequence numbers SN in a plurality of TIDs. The sequence number SN is used to identify a portion of the data successfully received by the receiving station RX.

In the process of step S12, the first MAC processing unit 412 of the transmitting station TX executes fragmentation on one A-MSDU. The fragmentation is a process of fragmenting (dividing) the A-MSDU. Each of the fragmented A-MSDUs corresponds to an MPDU.

In the process of step S13, the first MAC processing unit 412 of the transmitting station TX executes MPDU encryption on each of the MPDUs. The MPDU encryption is a process of encrypting the MPDU. The encrypted MPDU can be decrypted between the base station AP and the wireless terminal apparatus WTA of which attribution is established.

In the process of step S14, the transmission buffer controller 413 of the transmitting station TX generates and stores the transmission bitmap TBM.

In the process of step S15, the STA function of the transmitting station TX adds a MAC header and an error detection code to the encrypted MPDU. The MAC header includes MAC addresses of a destination and a transmission source, and an EtherType field. The error detection code is used for error detection of the received data in the receiving station RX. As the error detection code, for example, a cyclic redundancy check (CRC) is used.

In the process of step S16, the STA function of the transmitting station TX executes A-MPDU aggregation. The A-MPDU aggregation is a process of generating one A-MPDU by combining a plurality of MPDUs. The generated A-MPDU is input to the physical layer.

As described above, in the information communication system 1 according to the first embodiment, the processes of steps S10 to S14 are executed by the link management unit LM of the transmitting station TX, and the processes of steps S15 and S16 are executed by each STA function of the transmitting station TX. The link management unit LM of the transmitting station TX may configure a data frame by adding a header including the sequence number SN to the MPDU. That is, the process of step S15 may be executed by the link management unit LM of the transmitting station TX.

### (Process of receiving station RX)

As illustrated on the right side of Fig. 10, when the process of the physical layer on the received wireless signal is completed, the receiving station RX sequentially executes the processes of steps S20 to S26 in the MAC layer.

In the process of step S20, the frame processing unit 621 of the STA function of the receiving station RX executes the A-MPDU deaggregation. The A-MPDU deaggregation is a process of deaggregating (dividing) the A-MPDU input from the physical layer in units of MPDUs.

In the process of step S21, the reception success/failure determination unit 622 of the STA function of the receiving station RX executes error detection. The error detection is a process of detecting an error of received data using an error detection code (for example, CRC). The error detection in step S21 is executed for each MPDU.

In the process of step S22, the link management unit LM of the receiving station RX confirms a reception status. Specifically, the reception status management unit 421 of the link management unit LM of the receiving station RX determines whether the data (MPDU) is successfully received based on whether the error detection succeeds. When no error has been detected, that is, when the data is successfully received, the reception status management unit 421 executes the next process using the data. Conversely, when an error has been detected, the reception status management unit 421 discards the data in which the error has been detected. In addition, the reception status management unit 421 stores the reception bitmap RBM and updates the reception bitmap RBM based on the reception status of data. In response to reception of the BlockAck request, the reception status management unit 421 transmits the BlockAck including at least a part of the reception bitmap RBM to the transmitting station TX using the STA function that has received the BlockAck request.

In the process of step S23, the second MAC processing unit 422 of the link management unit LM of the receiving station RX executes MPDU decryption. The MPDU decryption is a process of decrypting the encrypted MPDU. The MPDU is successfully decrypted in the case of data communicated between the base station AP and the wireless terminal apparatus WTA in which the attribution is established.

In the process of step S24, the rearrangement buffer unit 423 of the link management unit LM of the receiving station RX executes a process of rearranging the decrypted MPDUs. The rearrangement process is a process of rearranging the MPDUs which have been successfully received in order of the sequence numbers SN.

In the process of step S25, the third MAC processing unit 424 of the link management unit LM of the receiving station RX executes defragmentation of the rearranged MPDUs. The defragmentation is a process of restoring the A-MSDU by combining the plurality of MPDUs.

In the process of step S26, the third MAC processing unit 424 of the link management unit LM of the receiving station RX executes the A-MSDU deaggregation. The A-MSDU deaggregation is a process of dividing the restored A-MSDUs into units of the MSDUs. The divided A-MSDUs are input to the LLC layer.

As described above, in the information communication system 1 according to the first embodiment, the processes of steps S20 to S21 are executed by each STA function of the receiving station RX, and the processes of steps S22 to S26 are executed by the link management unit LM of the receiving station RX.

### <1-2-2> Method of transmitting and receiving traffic allocated to one link

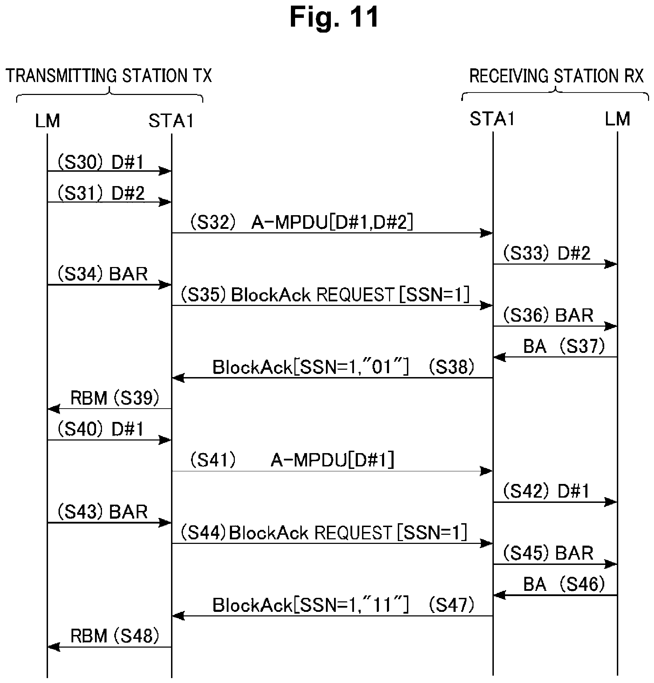

Fig. 11 is a sequence diagram illustrating an example of a method of transmitting and receiving traffic allocated to one link between the transmitting station TX and the receiving station RX in the information communication system 1 according to the first embodiment. Hereinafter, an overview of an operation of transmitting data D#1 and D#2 having the same TID from the transmitting station TX to the receiving station RX using one link (STA1) will be described with reference to Fig. 11.

When data D#1 and data D#2 are input from the upper layer, the link management unit LM of the transmitting station TX starts a process of transmitting data D#1 and data D#2.

First, the link management unit LM of the transmitting station TX inputs data D#1 in which SN=1 is allocated to STA1 of the transmitting station TX (step S30). Data D#1 is stored in the transmission buffer controller 413 of the link management unit LM of the transmitting station TX.

Subsequently, the link management unit LM of the transmitting station TX inputs data D#2 in which SN=2 is allocated to STA1 of the transmitting station TX (step S31). Data D#2 is stored in the transmission buffer controller 413 of the link management unit LM of the transmitting station TX.

Subsequently, STA1 of the transmitting station TX transmits an A-MPDU [D#1, D#2] including an MPDU including data D#1 and an MPDU including data D#2 to STA1 of the receiving station RX (step S32).

In this example, STA1 of the receiving station RX that has received the A-MPDU [D#1, D#2] detects an error in the MPDU including data D#1 and does not detect an error in the MPDU including data D#2. In this case, STA1 of the receiving station RX inputs data D#2 received from the transmitting station TX to the link management unit LM of the receiving station RX (step S33). Then, the link management unit LM of the receiving station RX updates the reception bitmap RBM based on the reception result of the A-MPDU [D#1, D#2].

After the transmission of the A-MPDU [D#1, D#2] is completed, the link management unit LM of the transmitting station TX generates a BlockAck request (BAR) in accordance with, for example, a preset schedule and inputs the generated BlockAck request to STA1 of the transmitting station TX (step S34).

Then, STA1 of the transmitting station TX transmits the BlockAck request [SSN=1] input from the link management unit LM to STA1 of the receiving station RX (step S35). [SSN=1] indicates content of the BlockAck request. The start sequence number SSN included in the BlockAck request indicates a start sequence number SSN of the BlockAck requested to the receiving station RX.

When the BlockAck request [SSN=1] is received, STA1 of the receiving station RX inputs the received BlockAck request to the link management unit LM of the receiving station RX (step S36).

When the BlockAck request is received, the link management unit LM of the receiving station RX generates BlockAck (BA) including a portion of the reception bitmap RBM designated by SSN=1 included in the BlockAck request and inputs the generated BlockAck [SSN=1, "01"] to STA1 of the receiving station RX (step S37). The BlockAck includes information indicating a reception result of the A-MPDU [D#1, D#2] by the receiving station RX.

Then, STA1 of the receiving station RX transmits BlockAck [SSN=1, "01"] input from the link management unit LM to STA1 of the transmitting station TX (step S38). [SSN=1, "01"] indicates content of the reception bitmap RBM included in BlockAck. SSN=1 indicates that the start sequence number SSN indicated by the BlockAck request is "1." "01" corresponds to the bitmap information BMI included in the reception bitmap RBM. The first number in "01" indicates a reception status of the MPDU corresponding to the start sequence number SSN. The second number in "01" indicates the reception status of the MPDU corresponding to the sequence number SN subsequent to the start sequence number SSN. For example, in the reception bitmap RBM, when a bit corresponding to a certain sequence number SN is "1," the bit indicates that the data of the sequence number SN is received by the receiving station RX (that is, the data has been delivered to the receiving station RX.). When a bit corresponding to a certain sequence number SN is "0," the bit indicates that the data of the sequence number SN is not received by the receiving station RX.

When BlockAck [SSN=1, "01"] is received, STA1 of the transmitting station TX inputs the reception bitmap RBM included in BlockAck to the link management unit LM of the transmitting station TX (step S39). The link management unit LM of the transmitting station TX refers to the start sequence number SSN and the bitmap information BMI included in the input reception bitmap RBM. Then, the link management unit LM of the transmitting station TX erases data D#2 of SN=2 from the transmission buffer controller 413 based on "1" which is a numerical value associated with SN=2 in the reception bitmap RBM. On the other hand, the link management unit LM of the transmitting station TX executes a process of retransmitting data D#1 based on "0" which is a numerical value associated with SN=1 in the reception bitmap RBM. Specifically, the link management unit LM of the transmitting station TX inputs data D#1 of SN=1 to STA1 of the transmitting station TX (step S40). Then, STA1 of the transmitting station TX transmits the A-MPDU [D#1] including the MPDU including data D#1 to STA1 of the receiving station RX (step S41).

In this example, STA1 of the receiving station RX that has received the A-MPDU [D#1] does not detect an error in the MPDU including data D#1. In this case, STA1 of the receiving station RX inputs data D#1 received from the transmitting station TX to the link management unit LM of the receiving station RX (step S42). Further, the link management unit LM of the receiving station RX updates the reception bitmap RBM based on a reception result of the A-MPDU [D#1].

When the transmission of the A-MPDU [D#1] is completed, the link management unit LM of the transmitting station TX generates a BlockAck request (BAR) in accordance with, for example, a preset schedule and inputs the generated BlockAck request to STA1 of the transmitting station TX (step S43).

Then, STA1 of the transmitting station TX transmits the BlockAck request [SSN=1] input from the link management unit LM to STA1 of the receiving station RX (step S44).

When the BlockAck request [SSN=1] is received, STA1 of the receiving station RX inputs the received BlockAck request to the link management unit LM of the receiving station RX (step S45).

When the BlockAck request is received, the link management unit LM of the receiving station RX generates BlockAck (BA) including a portion of the reception bitmap RBM designated by SSN=1 included in the BlockAck request and inputs the generated BlockAck [SSN=1, "11"] to STA1 of the receiving station RX (step S46). The reception bitmap RBM includes information indicating a reception result of the A-MPDU [D#1] by the receiving station RX.

Then, STA1 of the receiving station RX transmits BlockAck [SSN=1, "11"] input from the link management unit LM to STA1 of the transmitting station TX (step S47).

When BlockAck [SSN=1, "11"] is received, STA1 of the transmitting station TX inputs the reception bitmap RBM included in the BlockAck to the link management unit LM of the transmitting station TX (step S48).

The link management unit LM of the transmitting station TX refers to the start sequence number SSN and the bitmap information BMI included in the input reception bitmap RBM. Then, the link management unit LM of the transmitting station TX erases data D#1 of SN=1 from the transmission buffer controller 413 based on "1" which is a numerical value associated with SN=1 in the reception bitmap RBM. Thereafter, the transmitting station TX completes the process of transmitting data D#1 and D#2 to the receiving station RX in response to the erasing of data D#1 and D#2 stored in the transmission buffer controller 413.

### (Format of A-MPDU)

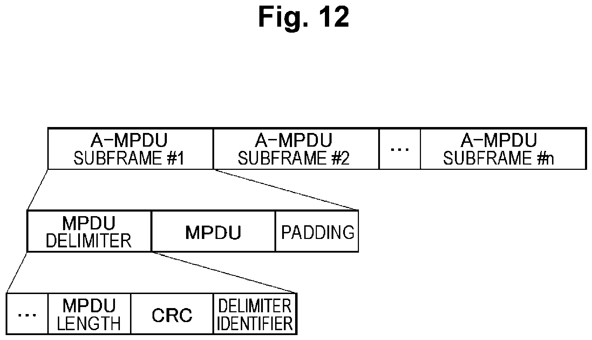

Fig. 12 is a conceptual diagram illustrating an example of a format of an A-MPDU used for communication between the transmitting station TX and the receiving station RX in the information communication system 1 according to the first embodiment. As illustrated in Fig. 12, fields included in the A-MPDU include, for example, A-MPDU subframe #1, A-MPDU subframe #2, ..., and A-MPDU subframe #n (where n is an integer equal to or greater than 3). The A-MPDU subframe includes a plurality of fields in which an error can be detected. Specifically, the A-MPDU subframe includes an MPDU delimiter, an MPDU, and a padding. The MPDU delimiter includes an MPDU length, a CRC, and a delimiter identifier. The MPDU length indicates a length of the MPDU included in the A-MPDU subframe. The CRC in the MPDU is used to detect an error of the MPDU delimiter. The delimiter identifier is used to detect the MPDU delimiter. The MPDU includes, for example, a data frame. The format of the A-MPDU may be another format.

### (Format of MPDU)

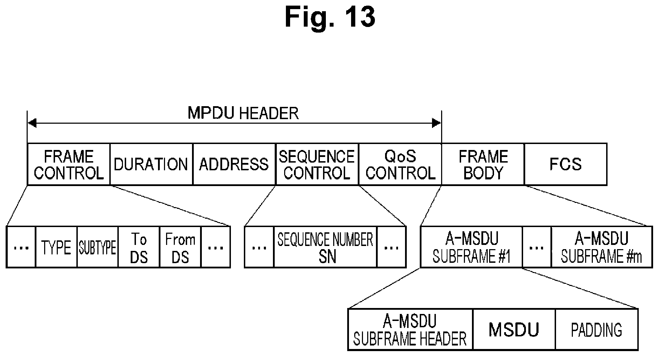

Fig. 13 is a conceptual diagram illustrating an example of a format of a MPDU used for communication between the transmitting station TX and the receiving station RX in the information communication system 1 according to the first embodiment. As illustrated in Fig. 13, fields included in the MPDU include, for example, a frame control field, a duration field, an address field, a sequence control field, a quality of service (QoS) control field, a frame body field, and a frame check sequence (FCS) field. These fields may or may not be included depending on a type of wireless frame.

The frame control field, the duration field, the address field, the sequence control field, and the QoS control field correspond to a header (MAC header) of the MPDU. The frame body field is a field in which data is stored, for example. The FCS field stores an error detection code of a set of the MAC header and the frame body field and is used to determine whether there is an error in the data frame.

The frame control field stores various kinds of control information. For example, the frame control field includes a type value, a subtype value, a To Distribution System (To DS) value, and a From Distribution System (From DS) value. The type value indicates a frame type of the wireless frame. For example, Type value "00" indicates that the wireless frame is a management frame. Type value "01" indicates that the wireless frame is a control frame. Type value "10" indicates that the wireless frame is a data frame. Content of the wireless frame varies depending on a combination of the type value and the subtype value. For example, "00/1000 (Type value/Subtype value)" indicates that the wireless frame is a beacon signal. The meanings of the To DS value and the From DS value vary depending on the combination. For example, "00 (To DS/From DS)" indicates data between terminals in the same independent basic service set (IBSS). "10 (To DS/From DS)" indicates that the data frame is directed to the DS (Distribution System) from the outside. "01 (To DS/From DS)" indicates that the data frame is directed to the outside of the DS. "11 (To DS/From DS)" is used when a mesh network is configured.

The duration field indicates a scheduled period in which the wireless line is used. The address field indicates a BSSID, a transmission source address, a destination address, an address of a transmitter terminal, an address of a receiver terminal, and the like. The sequence control field may include a sequence number SN of the data frame, and a fragment number for fragment. The QoS control field includes, for example, TID information. The TID information may be inserted into another position in the wireless frame. The frame body field includes information corresponding to a type of frame. For example, when the wireless frame is a data frame, the frame body field stores a plurality of A-MSDU subframes #1 to #m (where m is an integer equal to or greater 2). Each of the A-MSDU subframes stores an A-MSDU subframe header, MSDUs, and a padding. The MSDU stores data to be communicated between the wireless terminal apparatus WTA and the base station AP.

### (Format of BlockAck request)

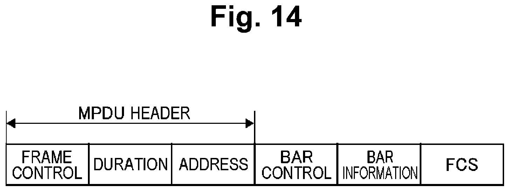

Fig. 14 is a conceptual diagram illustrating an example of a format of a BlockAck request frame used for communication between the transmitting station TX and the receiving station RX in the information communication system 1 according to the first embodiment. As illustrated in Fig. 14, fields included in the BlockAck request frame include a frame control field, a duration field, an address field, a BlockAck request (BAR) a control field, a BAR information field, and an FCS field. A configuration of each of the frame control field, the duration field, the address field, and the FCS field is similar to that of the data frame. The BAR control field indicates information regarding control of the BlockAck request. The BAR information field indicates, for example, a smallest number among the sequence numbers SN of the MAC frame for which BlockAck is requested. The format of the BlockAck request frame may be another format.

### (BlockAck format)

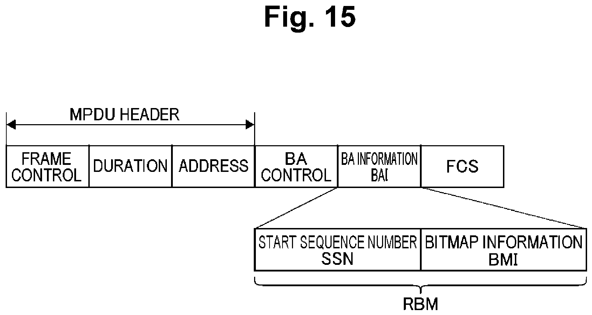

Fig. 15 is a conceptual diagram illustrating an example of a format of a BlockAck frame used for communication between the transmitting station TX and the receiving station RX in the information communication system 1 according to the first embodiment. As illustrated in Fig. 15, fields included in a BlockAck frame include a frame control field, a duration field, an address field, a BlockAck (BA) control field, a BA information field, and an FCS field. A configuration of each of the frame control field, the duration field, the address field, and the FCS field is similar to that of the data frame. The BA control field indicates information indicating a type of BlockAck. The BA Information field includes a reception bitmap RBM. The reception bitmap RBM includes a start sequence number SSN and bitmap information BMI. The format of the BlockAck frame may be another format.

### <1-2-3> Method of transmitting and receiving traffic allocated to plurality of links

In the information communication system 1 according to the first embodiment, when the transmitting station TX in which the multi-link are established transmits traffic allocated to the plurality of links to the receiving station RX, the link management unit LM transmits a BlockAck request via any one of the links to confirm a data delivery status. The link management unit LM may periodically transmit the BlockAck request using each link or may accept a notification indicating that the data has been transmitted from each link and execute the transmission. Then, the link management unit LM of the transmitting station TX confirms whether the data has been successfully delivered based on the reception bitmap RBM in BlockAck received from the receiving station RX and appropriately executes a retransmission process. Hereinafter, differences between a method of transmitting and receiving traffic allocated to a plurality of links and a method of transmitting and receiving traffic allocated to one link will be mainly described.

### (Process of transmitting station TX)

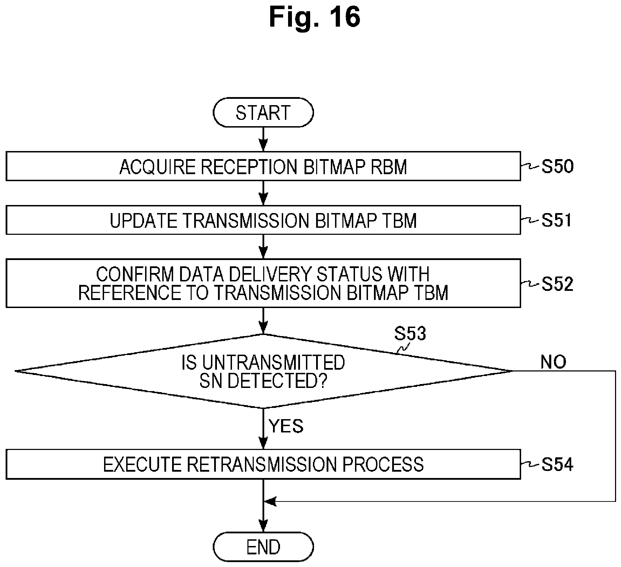

Fig. 16 is a flowchart illustrating an example of a delivery confirmation process in the transmitting station TX of the information communication system 1 according to the first embodiment. The delivery confirmation process illustrated in Fig. 16 is started when the transmitting station TX receives BlockAck from the receiving station RX.

First, the transmission buffer controller 413 of the transmitting station TX acquires the reception bitmap RBM included in BlockAck received from the receiving station RX (step S50). The STA function of receiving BlockAck may be any of a plurality of STA functions of establishing multi-link.

Then, the transmission buffer controller 413 updates the transmission bitmap TBM based on the acquired reception bitmap RBM (step S51). Then, the transmission buffer controller 413 discards the MPDU corresponding to the successfully delivered sequence number SN from the transmission buffer controller 413.

Subsequently, the transmission buffer controller 413 confirms the data delivery status with reference to the transmission bitmap TBM stored in the transmission buffer controller 413 (step S52).

Then, the transmission buffer controller 413 confirms whether the sequence number SN that has not been received by the receiving station RX is detected through the process of step S52 (step S53).

When the sequence number SN that has not been received by the receiving station RX is detected (YES in step S53), the transmission buffer controller 413 and the data distribution unit 414 cause, for example, an STA function of receiving BlockAck to execute a process of retransmitting the MPDU corresponding to the sequence number SN that has not been received by the receiving station RX (step S54). The transmission buffer controller 413 and the data distribution unit 414 may cause data which is a target of the retransmission process to be transmitted using the same STA function as the STA function used when the delivery has failed, or may cause data to be transmitted using an STA function different from that used when the delivery has failed. That is, the link management unit LM of the transmitting station TX may retransmit the data, and may use a link used when the delivery has failed or may use a link different from the link used when the delivery has failed.

When the sequence number SN that has not been received by the receiving station RX is not detected (NO in step S53), the transmission buffer controller 413 ends the delivery confirmation process.

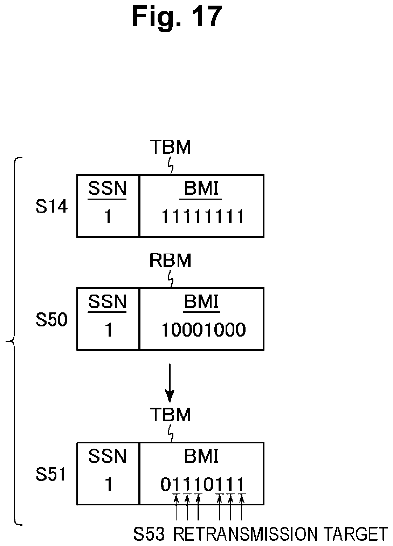

Fig. 17 is a conceptual diagram illustrating a specific example of a method of confirming a delivery status in the transmitting station TX of the information communication system 1 according to the first embodiment. Hereinafter, a specific example of a method of confirming the delivery status by an STA function of the transmitting station TX will be described with reference to Figs. 10, 16, and 17 as appropriate.

In this example, the transmission buffer controller 413 of the transmitting station TX stores the transmission bitmap TBM including a start sequence number SSN=1 and bitmap information BMI="11111111" (step S14). In this example, when a bit corresponding to a certain sequence number SN is "1" in the transmission bitmap TBM, the bit indicates that the data of the sequence number SN is output from the transmission buffer controller 413 for transmission, but it is not confirmed that the data has been received by the receiving station TX. In the transmission bitmap TBM, when a bit corresponding to a certain sequence number SN is "0," the bit indicates that the data of the sequence number SN is received by the receiving station RX (that is, the data is delivered to the receiving station RX.).

After the A-MPDU associated with the transmission bitmap TBM is transmitted to the receiving station RX by any STA of the transmitting station TX, the transmission buffer controller 413 receives BlockAck including the reception bitmap RBM [SSN=1, BMI="10001000"] via, for example, STA 1 of the transmitting station TX (step S50).

Then, the transmission buffer controller 413 updates the transmission bitmap TBM based on the reception bitmap RBM [SSN=1, BMI="10001000"] (step S51). In this example, since each of the bit associated with SN=1 and the bit associated with SN=5 is "1" in the reception bitmap RBM, the transmission buffer controller 413 detects that data of SN=1 and data of SN=5 have been successfully delivered and updates a bit indicating that the delivery has succeeded to "0" in the transmission bitmap TBM.

Then, since each of the plurality of bits associated with SN=2, SN=3, SN=4, SN=6, SN=7, and SN=8 is "1" in the transmission bitmap TBM, the transmission buffer controller detects that the data of SN=2 to 4 and 6 to 8 is not received by the receiving station RX, that is, the data of these sequence numbers SN is a retransmission target (step S53) .

As described above, the link management unit LM of the transmitting station TX updates the transmission bitmap TBM based on the reception bitmap RBM included in the received BlockAck. Then, the link management unit LM of the transmitting station TX executes a process of retransmitting the data of the sequence number SN that has not been delivered in the transmission bitmap TBM. A numeral of each bit in the transmission bitmap TBM may be another number as long as whether the bit is a transmission target can be distinguished.

### (Specific example of transmission and reception of traffic allocated to plurality of links)

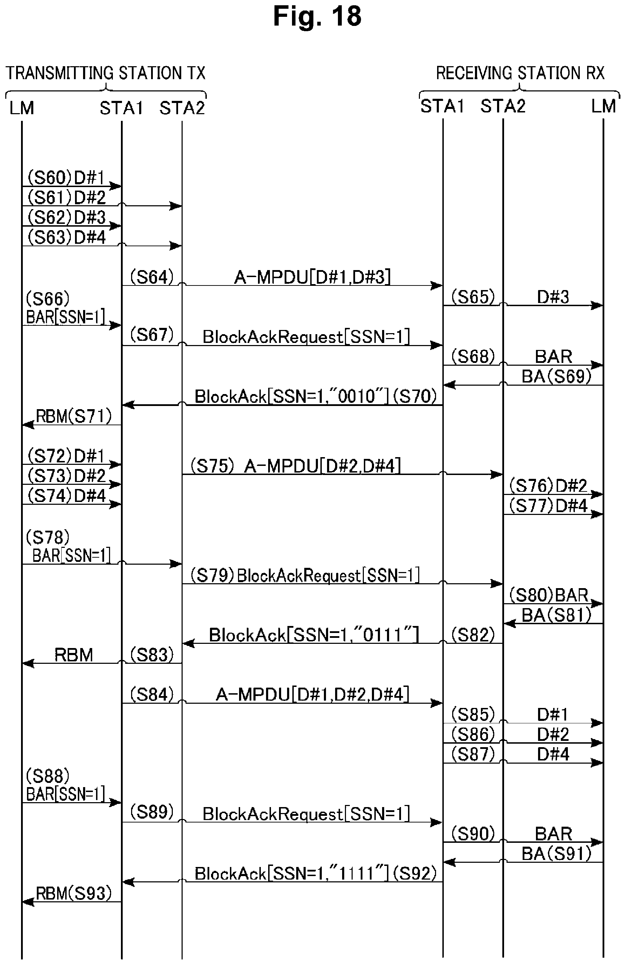

Fig. 18 is a sequence diagram illustrating an example of a communication method in which a plurality of links are used by the transmitting station TX and the receiving station RX in the information communication system 1 according to the first embodiment. Hereinafter, an overview of an operation in which data D#1, data D#2, data D#3, and data D#4 having the same TID are transmitted from the transmitting station TX to the receiving station RX using a plurality of links (STA1 and STA2) will be described with reference to Fig. 18.

When data D#1, data D#2, data D#3, and data D#4 are input from an upper layer, the link management unit LM of the transmitting station TX starts a process of transmitting data D#1, data D#2, data D#3, and data D#4.

First, the link management unit LM of the transmitting station TX stores data D#1, data D#2, data D#3, and data D#4 in the transmission buffer controller 413. In this example, sequence numbers SN=1 to 4 are allocated to pieces of data D#1 to data D#4, and the transmission bitmap TBM stores the start sequence number SSN=1.

Subsequently, the link management unit LM of the transmitting station TX inputs data D#1 to STA1 of the transmitting station TX (step S60).

Subsequently, the link management unit LM of the transmitting station TX inputs data D#2 to STA2 of the transmitting station TX (step S61).

Subsequently, the link management unit LM of the transmitting station TX inputs data D#3 to STA1 of the transmitting station TX (step S62).

Subsequently, the link management unit LM of the transmitting station TX inputs data D#4 to STA2 of the transmitting station TX (step S63).

In this way, in this example, data is input to each of STA1 and STA2 of the transmitting station TX. The data transmission sequence by STA1 of each of the transmitting station TX and the receiving station RX and the data transmission sequence by STA2 of each of the transmitting station TX and the receiving station RX can be executed in parallel. To facilitate description, first, a transmission sequence of the A-MPDU by STA1 of the transmitting station TX will be described.

STA1 of the transmitting station TX transmits an A-MPDU [D#1, D#3] including an MPDU including data D#1 and an MPDU including data D#3 to STA1 of the receiving station RX (step S64).

In this example, STA1 of the receiving station RX that has received the A-MPDU [D#1, D#3] detects an error in the MPDU including data D#1 and does not detect an error in the MPDU including data D#3. In this case, STA1 of the receiving station RX inputs data D#3 received from the transmitting station TX to the link management unit LM of the receiving station RX (step S65). Then, the link management unit LM of the receiving station RX updates the reception bitmap RBM based on the reception result and stores data D#3 in the rearrangement buffer unit 423.

After the transmission of the A-MPDU [D#1, D#3] is completed, the link management unit LM of the transmitting station TX generates a BlockAck request (BAR) according to, for example, a preset schedule, and inputs the generated BlockAck request to STA1 of the transmitting station TX (step S66) .

Then, STA1 of the transmitting station TX transmits the BlockAck request [SSN=1] input from the link management unit LM to STA1 of the receiving station RX (step S67). [SSN=1] indicates that the receiving station RX is requested to confirm a delivery status of data with a sequence number SN=1 or later.

When the BlockAck request [SSN=1] is received, STA1 of the receiving station RX inputs the received BlockAck request to the link management unit LM of the receiving station RX (step S68).

When the BlockAck request is received, the link management unit LM of the receiving station RX generates BlockAck (BA) including the portion of the reception bitmap RBM designated by the BlockAck request and inputs the generated BlockAck [SSN=1, "0010"] to STA1 of the receiving station RX (step S69).

Then, STA1 of the receiving station RX transmits BlockAck [SSN=1, "0010"] input from the link management unit LM to STA1 of the transmitting station TX (step S70). [SSN=1, "0010"] indicates that the receiving station RX has successfully received data D#3 of SN=3.

STA1 of the transmitting station TX inputs a reception bitmap RBM [SSN=1, "0010"] included in the received BlockAck to the link management unit LM of the transmitting station TX (step S71).

The link management unit of the transmitting station TX detects that each of data D#3 of SN=3 is received by the receiving station RX and that data D#1 of SN=1, data D#2 of SN=2, and data D#4 of SN=4 has not been received by the receiving station RX based on the reception bitmap RBM [SSN=1, "0010"] received via STA1 of the transmitting station TX, and updates the transmission bitmap TBM. Then, the link management unit LM of the transmitting station TX erases data D#3 of SN=3 received by the receiving station RX from the transmission buffer controller 413. The link management unit LM of the transmitting station TX causes, for example, STA1 of the transmitting station TX to execute a process of retransmitting data D#1, data D#2, and data D#4 that have not been received by the receiving station RX.

Specifically, the link management unit LM of the transmitting station TX inputs data D#1 to STA1 of the transmitting station TX (step S72).

Subsequently, the link management unit LM of the transmitting station TX inputs data D#2 to STA1 of the transmitting station TX (step S73).

Subsequently, the link management unit LM of the transmitting station TX inputs data D#4 to STA1 of the transmitting station TX (step S74). The continued process of retransmitting data D#1, data D#2, and data D#4 will be described below.

Next, a transmission sequence of the A-MPDU by STA2 of the transmitting station TX will be described.

STA2 of the transmitting station TX transmits an A-MPDU [D#2, D#4] including an MPDU including data D#2 and an MPDU including data D#4 to STA2 of the receiving station RX (step S75).

In this example, STA2 of the receiving station RX that has received the A-MPDU [D#2, D#4] does not detect an error in both the MPDUs of data D#2 and D#4. In this case, STA2 of the receiving station RX inputs data D#2 received from the transmitting station TX to the link management unit LM of the receiving station RX (step S76). Then, the link management unit LM of the receiving station RX updates the reception bitmap RBM based on the reception result and stores data D#2 in the rearrangement buffer unit 423.

Subsequently, STA2 of the receiving station RX inputs data D#4 received from the transmitting station TX to the link management unit LM of the receiving station RX (step S77). Then, the link management unit LM of the receiving station RX updates the reception bitmap RBM based on the reception result and stores data D#4 in the rearrangement buffer unit 423.

After the transmission of the A-MPDU [D#2, D#4] is completed, the link management unit LM of the transmitting station TX generates a BlockAck request (BAR) in accordance with, for example, a preset schedule and inputs the generated BlockAck request to STA2 of the transmitting station TX (step S78).

Then, STA2 of the transmitting station TX transmits the BlockAck request [SSN=1] input from the link management unit LM to STA1 of the receiving station RX (step S79).

When the BlockAck request [SSN=1] is received, STA2 of the receiving station RX inputs the received BlockAck request to the link management unit LM of the receiving station RX (step S80).

When the BlockAck request is received, the link management unit LM of the receiving station RX generates BlockAck (BA) including the portion of the reception bitmap RBM designated by the BlockAck request and inputs the generated BlockAck [SSN=1, "0111"] to STA2 of the receiving station RX (step S81).

Then, STA2 of the receiving station RX transmits [SSN=1, "0111"] of BlockAck input from the link management unit LM to STA2 of the transmitting station TX (step S82). [SSN=1, "0111"] indicates that the receiving station RX has successfully received data D#2 to data D#4 of SN=2 to 4.

STA2 of the transmitting station TX inputs a reception bitmap RBM [SSN=1, "0111"] included in the received BlockAck to the link management unit LM of the transmitting station TX (step S83).

The link management unit LM of the transmitting station TX detects that data D#2 to data D#4 of SN=2 to 4 are received by the receiving station RX and that data D#1 of SN=1 is not received by the receiving station RX based on the reception bitmap RBM [SSN=1, "0111"] received via STA2 of the transmitting station TX, and updates the transmission bitmap TBM. Then, the link management unit LM of the transmitting station TX causes STA2 of the transmitting station TX to execute the process of retransmitting data D#1. In this example, detailed description of the process of retransmitting data D#1 by STA2 of the transmitting station TX will be omitted.

Here, a process of retransmitting data D#1 by STA1 of the transmitting station TX will be described.

STA1 of the transmitting station TX transmits an A-MPDU [D#1, D#2, and D#4] including an MPDU including data D#1, an MPDU including data D#2, and an MPDU including data D#4 to STA1 of the receiving station RX (step S84).

In this example, STA1 of the receiving station RX that has received the A-MPDU [D#1] does not detect an error in the plurality of MPDUs respectively including data D#1 to D#3. In this case, STA1 of the receiving station RX inputs data D#1 received from the transmitting station TX to the link management unit LM of the receiving station RX (step S85). Then, the link management unit LM of the receiving station RX updates the reception bitmap RBM based on the reception result and stores data D#1 in the rearrangement buffer unit 423.

Subsequently, STA1 of the receiving station RX inputs data D#2 received from the transmitting station TX to the link management unit LM of the receiving station RX (step S86). Then, since data D#2 has already been stored in the rearrangement buffer unit 423, the link management unit LM of the receiving station RX discards the duplicated data D#2.

Subsequently, STA1 of the receiving station RX inputs data D#4 received from the transmitting station TX to the link management unit LM of the receiving station RX (step S87). Then, since data D#4 has already been stored in the rearrangement buffer unit 423, the link management unit LM of the receiving station RX discards the duplicated data D#4.

After the transmission of the A-MPDU [D#1, D#2, and D#4] is completed, the link management unit LM of the transmitting station TX generates a BlockAck request (BAR) in accordance with, for example, a preset schedule and inputs the generated BlockAck request to STA1 of the transmitting station TX (step S88).

Then, STA1 of the transmitting station TX transmits the BlockAck request [SSN=1] input from the link management unit LM to STA1 of the receiving station RX (step S89).

When the BlockAck request [SSN=1] is received, STA1 of the receiving station RX inputs the received BlockAck request to the link management unit LM of the receiving station RX (step S90).

When the BlockAck request is received, the link management unit LM of the receiving station RX generates BlockAck (BA) including the portion of the reception bitmap RBM designated by the BlockAck request and inputs the generated BlockAck [SSN=1, "1111"] to STA1 of the receiving station RX (step S91).

Then, STA1 of the receiving station RX transmits [SSN=1, "1111"] of BlockAck input from the link management unit LM to STA1 of the transmitting station TX (step S92). [SSN=1, "1111"] indicates that data D#1 to data D#4 with SN=1 to 4 have been successfully received.

STA1 of the transmitting station TX inputs a reception bitmap RBM [SSN=1, "1111"] included in the received BlockAck to the link management unit LM of the transmitting station TX (step S93).

The link management unit of the transmitting station TX detects that data D#1 to data D#4 of SN=1 to 4 are received by the receiving station RX based on the reception bitmap RBM [SSN=1, "1111"] received via STA1 of the transmitting station TX and updates the transmission bitmap TBM. Then, the link management unit LM of the transmitting station TX deletes data D#1 of SN=1 received by the receiving station RX from the transmission buffer controller 413. Thereafter, the transmitting station TX completes the transmission process of data D#1 to data D#4 to the receiving station RX in response to the erasure of data D#1, data D#2, data D#3, and data D#4 stored in the transmission buffer controller 413.

### <1-3> Advantageous effects of first embodiment

In the information communication system 1 according to the first embodiment described above, it is possible to improve efficiency of data communication while using multi-link. Hereinafter, advantageous effects of the information communication system 1 according to the first embodiment will be described.

Each of the base station AP and the wireless terminal apparatus WTA using the wireless LAN may have a plurality of STA functions that can use different bands such as 2.4 GHz, 5 GHz, and 6 GHz. In this case, between the base station AP and the wireless terminal apparatus WTA, for example, wireless connection is established using one STA function among a plurality of STA functions, and data is transmitted and received. The base station AP and the wireless terminal apparatus WTA can establish multi-links using the plurality of STA functions. In data communication in which the multi-links are used, the plurality of bands can be used in combination, efficient communication can be realized, and a communication speed can be improved.

As a multi-link operating method, it is conceivable that the transmitting station TX allocates transmission of data having the same TID to the plurality of STA functions (links). However, in this case, the sequence numbers SN of the data to be transmitted may be discontinuous in each of the plurality of links. When the sequence numbers SN are discontinuous, each STA function of the transmitting station TX cannot determine whether the data that is not received is data which has failed to be received or the data which has not been transmitted (that is, the data to which a sequence number SN of a missing number is assigned) when the reception status of data is managed.

Accordingly, in the information communication system 1 according to the first embodiment, the link management unit LM of the transmitting station TX and the link management unit LM of the receiving station RX take consistency of the reception statuses of the data to be transmitted. Specifically, the link management unit LM of the transmitting station TX stores the transmission bitmap TBM indicating the sequence number SN of the data to be transmitted, and the link management unit LM of the receiving station RX stores the reception bitmap RBM indicating the sequence number SN of the received data.

The link management unit LM of the receiving station RX updates the reception bitmap RBM in accordance with the reception status of data. The link management unit LM of the transmitting station TX appropriately transmits a BlockAck request to the link management unit LM of the receiving station RX. Then, when BlockAck is received from the receiving station RX, the link management unit LM of the transmitting station TX updates the transmission bitmap TBM and confirms the data delivered to the receiving station RX.

As a result, in the information communication system 1 according to the first embodiment, even when data is distributed to a plurality of links while using multi-link, the reception statuses of the transmitting station TX and the receiving station RX are consistent, and thus data can be transmitted using the plurality of links. As a result, the information communication system 1 according to the first embodiment can improve efficiency of data communication while using multi-link. Since the information communication system 1 according to the first embodiment can execute a process of retransmitting data that has not been received by the receiving station RX using BlockAck, it is possible to improve reliability of the data communication while using multi-link.

### <2> Second embodiment

A hardware configuration and a functional configuration of the information communication system 1 according to the second embodiment are similar to those of the first embodiment. The information communication system 1 according to the second embodiment confirms a data transmission status by each STA function before a retransmission process is executed. Hereinafter, the information communication system 1 according to the second embodiment will be described in terms of differences from the first embodiment.

### <2-1> Method of transmitting and receiving traffic allocated to plurality of links

### (Process of transmitting station TX)

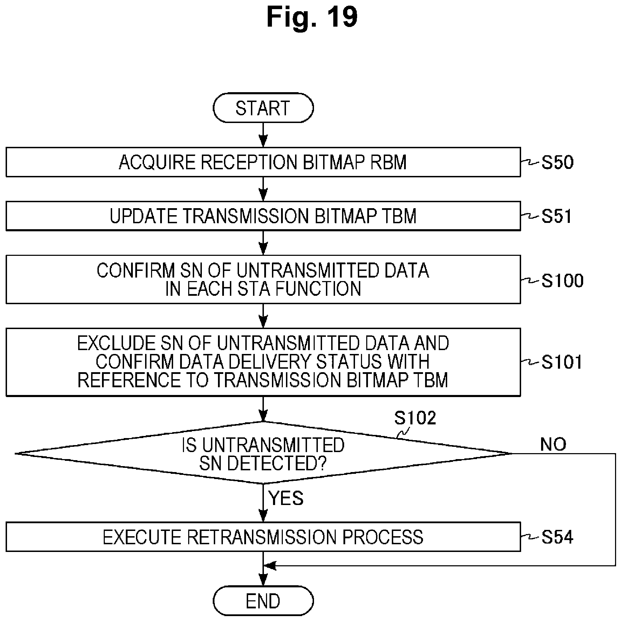

Fig. 19 is a flowchart illustrating an example of a delivery confirmation process in a transmitting station TX of the information communication system 1 according to the second embodiment. The delivery confirmation process illustrated in Fig. 19 is started when the transmitting station TX receives BlockAck from the receiving station RX.

First, the transmitting station TX acquires the reception bitmap RBM as in the first embodiment (step S50).

Then, as in the first embodiment, the link management unit LM of the transmitting station TX updates the transmission bitmap TBM based on the acquired reception bitmap RBM (step S51). The transmission buffer controller 413 discards the MPDU corresponding to the successfully delivered sequence number SN from the transmission buffer controller 413.

Then, the link management unit LM of the transmitting station TX confirms the sequence number SN of the untransmitted data in each STA function (step S100). Specifically, the transmission buffer controller 413 inquires of the accumulation unit 611 of each of the STA functions establishing the multi-link, and confirms whether there is the untransmitted data in each of the STA functions. When there is the untransmitted data, the transmission buffer controller 413 confirms the sequence number SN of the untransmitted data.

Next, the link management unit LM of the transmitting station TX excludes the sequence number SN of the untransmitted data confirmed through the process of step S101 and confirms the data delivery status with reference to the transmission bitmap TBM stored in the transmission buffer controller 413 (step S101).

Then, the transmission buffer controller 413 confirms whether the sequence number SN that has not been received by the receiving station RX is detected through the process of step S101 (step S102).

When the sequence number SN that has not been received by the receiving station RX is detected (YES in step S102), the transmission buffer controller 413 and the data distribution unit 414 cause, for example, the STA function receiving BlockAck to execute a process of retransmitting the MPDU corresponding to the sequence number SN that has not been received by the receiving station RX (step S54). The transmission buffer controller 413 and the data distribution unit 414 may cause data which is a target of the retransmission process to be transmitted using the same STA function as the STA function used when the delivery has failed, or may cause data to be transmitted using an STA function different from that used when the delivery has failed.

When the sequence number SN that has not been received by the receiving station RX is not detected (NO in step S102), the transmission buffer controller 413 ends the delivery confirmation process.

As the STA function which is a confirmation target of the data delivery status, at least the STA functions other than the STA function used to receive BlockAck among the plurality of STA functions configuring the multi-link are all preferably set as targets. In the STA function used to receive BlockAck, the data delivery status may be confirmed or may not be confirmed. This is because the STA function transmitting the BlockAck request and receiving BlockAck is highly to transmit data waiting to be transmitted and stored in the accumulation unit 611 before the BlockAck request is transmitted.

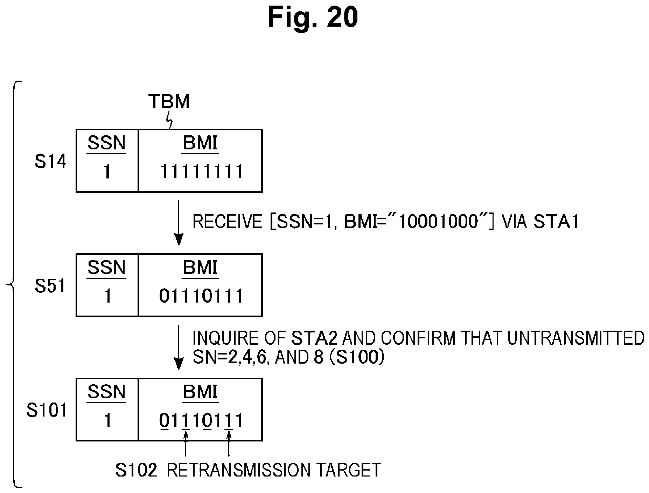

Fig. 20 is a conceptual diagram illustrating a specific example of a method of confirming a delivery status in the transmitting station TX of the information communication system 1 according to the first embodiment. Hereinafter, a specific example of a method of confirming the delivery status by the STA function of the transmitting station TX will be described with reference to Figs. 10, 19, and 20 as appropriate.

In this example, the transmission buffer controller 413 of the transmitting station TX stores the transmission bitmap TBM including a start sequence number SSN=1 and bitmap information BMI="11111111" (step S14). After the A-MPDU associated with the transmission bitmap TBM is transmitted to the receiving station RX by any STA of the transmitting station TX, the transmission buffer controller 413 receives BlockAck including the reception bitmap RBM [SSN=1, BMI="10001000"] via, for example, STA1 of the transmitting station TX (step S50).

Then, the transmission buffer controller 413 updates the transmission bitmap TBM based on the reception bitmap RBM [SSN=1, BMI="10001000"] (step S51). In this example, since the bit associated with SN=1 and the bit associated with SN=5 are "1" in the reception bitmap RBM, the transmission buffer controller 413 detects that the data of SN=1 and the data of SN=5 have been successfully delivered, and updates the bit for which the delivery has been successful to "0" in the transmission bitmap TBM.

Then, the transmission buffer controller 413 inquires of STA2 and confirms that the data of SN=2, 4, 6, and 8 are each stored in the accumulation unit 611-2 as untransmitted data (step S100).

Then, the transmission buffer controller 413 excludes SN=2, 4, 6, and 8 with reference to the transmission bitmap TBM (step S101) and detects that the data of SN=3 and SN=7 are not received by the receiving station RX, that is, the data of these sequence numbers SN are retransmission targets, because each of a plurality of bits associated with SN=3 and SN=7 is "1" (step S102).

As described above, the link management unit LM of the transmitting station TX updates the transmission bitmap TBM based on the reception bitmap RBM included in the received BlockAck. Then, the link management unit LM of the transmitting station TX excludes untransmitted data in each STA function and executes a process of retransmitting data of the sequence number SN that has not been delivered in the transmission bitmap TBM. A numeral of each bit in the transmission bitmap TBM may be another number as long as whether the bit is a transmission target can be distinguished.

### (Specific example of transmission and reception of traffic allocated to plurality of links)

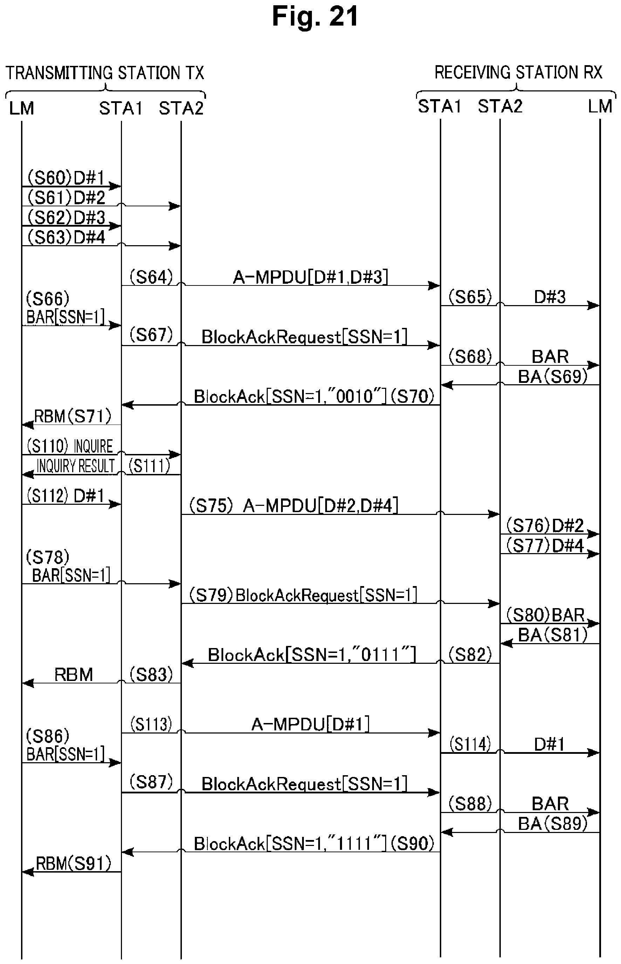

Fig. 21 is a sequence diagram illustrating an example of a communication method in which a plurality of links are used in the transmitting station TX and the receiving station RX in the information communication system 1 according to the second embodiment. An overview of an operation of transmitting data D#1, D#2, D#3, and D#4 having the same TID from the transmitting station TX to the receiving station RX using a plurality of links (STA1 and STA2) will be described below with reference to Fig. 21. The processes of steps S60 to S71 illustrated in Fig. 21 are similar to the processes of steps S60 to S71 illustrated in Fig. 18. The processes of steps S75 to S83 illustrated in Fig. 21 are similar to the processes of steps S75 to S83 illustrated in Fig. 18. In brief, in this example, as in the first embodiment, STA1 of the transmitting station TX transmits data D#1 and data D#3 to the receiving station RX, and the receiving station RX successfully receives data D#3. STA2 of the transmitting station TX transmits data D#2 and D#4 to the receiving station RX, and the receiving station RX successfully receives data D#2 and data D#4.

In the second embodiment, when BlockAck (reception bitmap RBM) is received via STA1 of the transmitting station TX through the processes of steps S66 to S71, the link management unit LM of the transmitting station TX inquires of STA2 of the transmitting station TX whether there is untransmitted data after updating of the transmission bitmap TBM (step S110). That is, in this example, a trigger to inquire of STA2 of the transmitting station TX whether there is the untransmitted data is a trigger used for STA1 of the transmitting station TX to receive BlockAck. The process of step S110 is not necessarily started using a specific STA function such as STA1 of the transmitting station TX as a starting point, but is started based on first reception of the reception bitmap RBM by any of the STA functions of the transmitting station TX. In this example, it is assumed that STA2 of the transmitting station TX does not transmit data D#2 and data D#4 to the receiving station RX when the link management unit LM of the transmitting station TX inquires of STA2.

In response to the inquiry from the link management unit LM, STA1 of the transmitting station TX inputs information (inquiry result) regarding the untransmitted data stored in the accumulation unit 611-2 to the link management unit LM of the transmitting station TX (step 5111) .

As a result, the link management unit LM of the transmitting station TX recognizes that data D#2 and data D#4 have not yet been transmitted by STA2 based on the inquiry result. The link management unit LM of the transmitting station TX excludes data D#2 and data D#4 and recognizes that data D#1 is not received by the receiving station RX, and sets data D#1 as a retransmission target with reference to the transmission bitmap TBM.

In the process of retransmitting data D#1, the link management unit LM of the transmitting station TX inputs data D#1 to STA1 of the transmitting station TX (step S112). In Fig. 21, after the process of step S112, the processes of steps S75 to S83 are executed.

Then, STA1 of the transmitting station TX transmits the A-MPDU [D#1] including the MPDU including data D#1 to STA1 of the receiving station RX (step S113) .

In this example, STA1 of the receiving station RX that has received the A-MPDU [D#1] does not detect an error in the MPDU including data D#1. In this case, STA1 of the receiving station RX inputs data D#1 received from the transmitting station TX to the link management unit LM of the receiving station RX (step S114). Then, the link management unit LM of the receiving station RX updates the reception bitmap RBM based on the reception result and stores data D#1 in the rearrangement buffer unit 423.

Then, as in the first embodiment, the processes of steps S86 to S91 are executed. That is, after the retransmission process, the transmission of the BlockAck request by the transmitting station TX and the transmission of the BlockAck by the receiving station RX are executed. Thereafter, the transmitting station TX completes the transmission process of data D#1 to data D#4 to the receiving station RX in response to the erasure of data D#1, data D#2, data D#3, and data D#4 stored in the transmission buffer controller 413.

### <2-2> Advantageous effects of second embodiment

As described above, in the wireless communication system 1 according to the second embodiment, the link management unit LM of the transmitting station TX inquires of each of the STA functions about a data transmission status before the retransmission process is executed. Then, the link management unit LM of the transmitting station TX excludes the untransmitted data confirmed by the inquiry and determines data which is a target of a retransmission process. As a result, the wireless communication system 1 according to the second embodiment can omit transmission of duplicated data, that is, data already received by the receiving station RX, in the retransmission process. As a result, the wireless communication system 1 according to the second embodiment can further improve efficiency of data communication as than in the first embodiment.

### <3> Others

In the foregoing embodiments, each STA function may notify the corresponding link management unit LM when a link cannot be maintained due to movement of the wireless terminal apparatus WTA or the like. The link management unit LM2 of the wireless terminal apparatus WTA may change a state of the multi-link with the link management unit LM1 of the base station AP based on a notification from the STA function. Specifically, for example, the link management unit LM2 of the wireless terminal apparatus WTA and the link management unit LM1 of the base station AP may appropriately change the STA function used for the multi-links. When the state of the multi-link is changed, the link management units LM1 and LM2 update link management information 51a and 51b, respectively. Furthermore, the link management units LM1 and LM2 may update the association between traffic and the STA function in accordance with an increase or a decrease in the number of links.

The configuration and functional configuration of the information communication system 1 according to the embodiments may be other configurations. For example, a case where each of the base station AP and the wireless terminal apparatus WTA has three STA functions (wireless signal processing units) has been exemplified, but the present invention is not limited thereto. The base station AP may include at least two wireless signal processing units. Similarly, the wireless terminal apparatus WTA may include at least two wireless signal processing units. The number of channels that can be processed by each STA function can be appropriately set according to a frequency band to be used. Each of the wireless communication modules 13 and 23 may correspond to wireless communication of a plurality of frequency bands by a plurality of communication modules, or may correspond to wireless communication of a plurality of frequency bands by one communication module. The functional configurations of the base station AP and the wireless terminal apparatus WTA may have other names and may be grouped as long as the operations described in the embodiment can be executed.

In the information communication system 1 according to the embodiment, each of the CPU 10 included in the base station AP and the CPU 20 included in the wireless terminal apparatus WTA may be another circuit. For example, each of the base station AP and the wireless terminal apparatus WTA may include a micro processing unit (MPU) or the like instead of the CPU. Each of the processes described in the embodiment may be realized by dedicated hardware. The processes of each of the base station AP and the wireless terminal apparatus WTA may include a process executed by software and a process executed by hardware in combination or may include only one of the processes.

In the embodiment, the flowchart used to describe the operation is merely exemplary. Each operation described in the embodiment may be interchanged within an order in which the processes can be sequential, or other processes may be added. The format of a wireless frame described in the embodiment is merely exemplary. In the information communication system 1, other formats may be used as long as the operations described in the embodiment can be executed.

In this specification, the "MPDU" may be referred to as a data unit. When the transmitting station TX transmits the traffic allocated to the plurality of links, a set of MPDUs allocated to a certain STA function may be referred to as a "data unit group." The transmission bitmap TBM and the reception bitmap RBM may be simply referred to as "information." The transmission bitmap TBM may be referred to as "transmission information." The reception bitmap RBM may be referred to as "reception information" or "delivery information." The "rearrangement buffer unit 423" may be simply referred to as a "buffer." The rearrangement process in the rearrangement buffer unit 423 and the output of data to the third MAC processing unit 424 are executed, for example, under the control of the manager 50. The roles of "0" and "1" in each piece of bitmap information may be reversed. The "BlockAck request" may be referred to as a "transmission request for information indicating the sequence number SN of the data received by receiving station RX" or a "transmission request for reception status of data."

A "transmitted state" indicates a state of a bit corresponding to the sequence number SN of the data confirmed to be received by the receiving station RX in the transmission bitmap TBM. That is, the "transmitted data" corresponds to the data confirmed to be received by the receiving station RX. A "received state' indicates a state of a bit corresponding to the sequence number SN of the data that the receiving station RX has successfully received in the reception bitmap RBM. That is, the "data received by the receiving station RX" corresponds to data which is successfully subjected to error correction of the data received from the transmitting station TX by the receiving station RX and is stored in the rearrangement buffer unit 422. The "data that has not been received by the receiving station RX" corresponds to data which is indicated not to have been received in the reception bitmap RBM.

The present invention is not limited to the foregoing embodiments, and various modifications can be made in the implementation stage without departing from the gist of the present invention. The embodiments may be implemented in appropriate combination, and in that case, the combined effect can be obtained. Further, the above-described embodiments include various inventions, and various inventions can be extracted by combinations selected from a plurality of disclosed components. For example, even if some components are deleted from all the components described in the embodiments, in a case where the problem can be solved and the advantageous effects can be obtained, configurations from which the components are deleted can be extracted as inventions.

### Reference Signs List

- 1: Information communication system
- 10, 20: CPU
- 11, 21: ROM
- 12, 22: RAM
- 13, 23: Wireless communication module
- 14: Wired communication module
- 24: Display
- 25: Storage
- 30: Data processing unit
- 40: MAC frame processing unit
- 411: Data categorizing unit
- 412: First MAC processing unit
- 413: Transmission buffer controller
- 414: Data distribution unit
- 421: Reception status management unit
- 422: Second MAC processing unit
- 423: Rearrangement buffer unit
- 424: Third MAC processing unit
- 50: Management unit
- 60: Wireless signal processing unit
- 610: Frame generation unit
- 611: Accumulation unit
- 612: Transmission/reception unit
- 613: Frame processing unit
- 620: Transmission/reception unit
- 621: Frame processing unit
- 622: Reception success/failure determination unit
- 623: Frame generation unit
- 70: Application executer
- LM1, LM2: Link management unit
- BS: Base station
- WTA: Wireless terminal apparatus
- TX: Transmitting station
- RX: Receiving station
- SN: Sequence number
- RBM: Reception bitmap
- TBM: Transmission bitmap
- SSN: Start sequence number
- BMI: Bitmap information

## Claims

1. A transmitting station comprising:
a first wireless signal processing unit configured to be able to transmit a wireless signal by using a first channel;
a second wireless signal processing unit configured to be able to transmit a wireless signal by using a second channel different from the first channel; and
a link management unit that is able to establish multi-link with a receiving station by using the first wireless signal processing unit and the second wireless signal processing unit, manage communication in which the multi-link are used, and store first information indicating a reception status of transmission target data, wherein
when second information indicating a sequence number of data which has been received by the receiving station is received from the receiving station via the first wireless signal processing unit or the second wireless signal processing unit, the link management unit sets a reception status of data corresponding to the sequence number indicated by the second information in the first information as a transmitted status.

2. The transmitting station according to claim 1, wherein
the link management unit causes the receiving station to transmit data that has not been received when it is confirmed that the data that has not been received by the receiving station remains in the reception status updated based on the second information.

3. The transmitting station according to claim 1, wherein
when it is confirmed that data that has not been received by the receiving station remains in the first information updated based on the second information, the link management unit inquires of the first wireless signal processing unit and the second wireless signal processing unit whether there is data that has not been transmitted in the multi-link and causes the receiving station to transmit the data that has not been received by the receiving station, excluding a sequence number of the data that has not been transmitted, confirmed by the inquiry.

4. The transmitting station according to any one of claims 1 to 3, wherein
the link management unit periodically transmits a request for transmitting information indicating the sequence number of the data which has been received by the receiving station to the receiving station.

5. A receiving station comprising:
a first wireless signal processing unit configured to be able to transmit a wireless signal by using a first channel;
a second wireless signal processing unit configured to be able to transmit a wireless signal by using a second channel different from the first channel; and
a link management unit that is able to establish multi-link with a transmitting station by using the first wireless signal processing unit and the second wireless signal processing unit, manage communication in which the multi-link are used, and store first information indicating a sequence number of data which has been received,
wherein, when data is received from the transmitting station via the first wireless signal processing unit or the second wireless signal processing unit, the link management unit sets a bit corresponding to a sequence number corresponding to the data which has been received, in the first information as a received bit.

6. The receiving station according to claim 5,
wherein the link management unit includes a buffer capable of storing an input data unit,
the first wireless signal processing unit inputs a data unit in which an error has not been detected among a received first data unit group to the buffer,
the second wireless signal processing unit inputs a data unit in which an error has not been detected among a received second data unit group to the buffer, and
the link management unit outputs a plurality of data units for which an order of sequence numbers is arranged to an upper layer in response to the arrangement of the order of the sequence numbers in the plurality of data units stored in the buffer.

7. The receiving station according to claim 6, wherein
the link management unit discards the input data unit when data with a sequence number assigned to the data unit input from the first wireless signal processing unit or the second wireless signal processing unit is already stored in the buffer.

8. The receiving station according to claim 7, wherein
when a request for transmitting a reception status of data is received from the transmitting station via the first wireless signal processing unit or the second wireless signal processing unit, the link management unit causes the transmitting station to transmit a wireless frame including the first information by using the first wireless signal processing unit or the second wireless signal processing unit.
